(19) Europäisches Patentamt

European Patent Office

Office européen des brevets

(11) **EP 2 612 124 B1**

(12) **FASCICULE DE BREVET EUROPEEN**

(45) Date de publication et mention de la délivrance du brevet:
**01.03.2017 Bulletin 2017/09**

(21) Numéro de dépôt: **11773024.2**

(22) Date de dépôt: **02.09.2011**

(51) Int Cl.:
**G01K 17/20** (2006.01)

(86) Numéro de dépôt international:
**PCT/FR2011/052016**

(87) Numéro de publication internationale:
**WO 2012/028829 (08.03.2012 Gazette 2012/10)**

(54) **DETERMINATION DU COEFFICIENT DE DEPERDITION THERMIQUE D'UN LOCAL**

BESTIMMUNG DES WÄRMEVERLUSTKOEFFIZIENTEN EINES GEBÄUDES

DETERMINATION OF THE HEAT LOSS COEFFICIENT OF A PREMISES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.09.2010 FR 1057033**

(43) Date de publication de la demande:
**10.07.2013 Bulletin 2013/28**

(73) Titulaire: **Saint-Gobain Isover**
**92400 Courbevoie (FR)**

(72) Inventeurs:
• **MANGEMATIN, Eric**
**F-60660 Cires Les Mello (FR)**
• **PANDRAUD, Guillaume**
**75011 Paris (FR)**
• **GILLES, Jérôme**
**Cambridge**
**02139 MA (US)**
• **ROUX, Didier**
**F-92400 Courbevoie (FR)**

(74) Mandataire: **Saint-Gobain Recherche**
**Département Propriété Industrielle**
**39 Quai Lucien Lefranc**
**93300 Aubervilliers (FR)**

(56) Documents cités:
**FR-A1- 2 907 215     NL-C1- 1 035 399**

**Description**

La présente invention a trait à un procédé et un dispositif pour déterminer le coefficient de déperdition thermique d'un local. Au sens de l'invention, un local est une maison individuelle ou un bâtiment, notamment à usage d'habitation ou tertiaire, ou encore une partie d'un tel bâtiment, par exemple un appartement dans un immeuble à plusieurs étages.

Le coefficient de déperdition thermique d'un local, noté K, est égal à la puissance de déperdition thermique du local (en Watts) par degré (Kelvin ou Celsius) d'écart entre la température de l'air à l'intérieur du local et la température de l'air extérieur. Ce coefficient K est représentatif des performances énergétiques de l'enveloppe du local.

Le documents NL 1 035 399 C1 et FR 2 907 215 A1 décrivent des examples.

Le coefficient de déperdition thermique K d'un local est influencé, d'une part, par les pertes thermiques par transmission à travers les parois du local et, d'autre part, par les infiltrations d'air. Les pertes thermiques par transmission sont représentées par un facteur $H_T = UA_T$, où U est le coefficient de transmission thermique de l'enveloppe du local, également appelé coefficient de déperdition spécifique par transmission du local, et $A_T$ est la surface totale des parois du local. Les infiltrations d'air dans le local sont représentées par un facteur m'.Cp, où m'est le débit de renouvellement de l'air et Cp est la capacité calorifique de l'air. Par conséquent, le coefficient de déperdition thermique $K$ est donné par la relation :

$$K = H_T + m'.Cp = UA_T + m'.Cp$$

Le coefficient U est utilisé, dans le cadre de réglementations thermiques telles que la RT 2005 en France ou le règlement EnEV en Allemagne, pour accéder à une estimation de la consommation globale d'énergie du local. Sa détermination est utile pour effectuer un diagnostic de l'isolation thermique d'un local, en particulier après sa construction, pour vérifier que le constructeur a respecté les normes en vigueur en termes d'isolation thermique aussi bien en termes de choix des matériaux que de leur mise en oeuvre, ou lorsqu'on envisage une réhabilitation du local, en vue d'évaluer les mesures qu'il convient de prendre pour améliorer la performance thermique.

Il est connu de déterminer le coefficient de déperdition thermique d'un local au moyen de logiciels de calcul qui font intervenir une modélisation de l'enveloppe du local. Ces logiciels sont relativement lourds à mettre en oeuvre et ont l'inconvénient de ne fournir qu'un résultat théorique, qui ne rend pas compte de paramètres réels tels que la mise en oeuvre effective des matériaux d'isolation, la technologie de construction, etc.

Par ailleurs, il est connu de déterminer le coefficient de déperdition thermique d'un local en réalisant des mesures in situ dans le local sur des périodes longues, qui s'étendent généralement sur plusieurs semaines ou mois, puis en procédant à une analyse statistique de ces mesures. L'analyse statistique est rendue nécessaire par la multiplicité des paramètres qui influencent le comportement thermique du local sur la période de mesure, notamment les conditions météorologiques et les conditions d'occupation du local. Ces méthodes de mesures in situ connues ont l'inconvénient d'être longues et de faire intervenir un matériel lourd et coûteux.

C'est à ces inconvénients qu'entend plus particulièrement remédier l'invention en proposant un procédé et un dispositif permettant de déterminer de manière rapide le coefficient de déperdition thermique d'un local, avec un coût modéré et une précision raisonnable.

A cet effet, l'invention a pour objet un procédé de détermination du coefficient de déperdition thermique $K$ d'un local, caractérisé en ce qu'il comprend des étapes dans lesquelles :

- on procède, dans le local inoccupé, à une campagne de mesures d'au moins une température à l'intérieur du local $T_{ik}$ à intervalles de temps rapprochés, sur au moins deux périodes de temps $D_k$ successives correspondant à des puissances $P_{totk}$ distinctes de chauffage du local ;
- on détermine la température de l'air extérieur $T_{ek}$ auxdits mêmes temps rapprochés ;
- pour chaque période de temps $D_k$, à partir de l'évolution $T_{ik}(t)$ de la grandeur $T_{ik}$ en fonction du temps, on analyse quantitativement cette évolution à travers un modèle mathématique simple :

   o soit, s'il existe un intervalle de temps $\Delta t_k$ pour lequel l'évolution $T_{ik}(t)$ est sensiblement linéaire, on détermine sur cet intervalle de temps $At_k$ la pente $\alpha_k$ de la tangente à la courbe $T_{ik}(t)$ et on déduit la valeur du coefficient de déperdition thermique $K$ du local à partir des pentes $\alpha_k$ ;

   o soit, s'il n'existe pas d'intervalle de temps pour lequel l'évolution $T_{ik}(t)$ est sensiblement linéaire, on sélectionne un intervalle de temps $\Delta t_k$ sur lequel l'évolution $T_k(t)$ est sensiblement exponentielle de type exp($-t/_\tau$), avec $\tau$ la constante de temps thermique du local, et on déduit la valeur du coefficient de déperdition thermique K du local, qui est la valeur telle que la courbe $Ln\left[(\theta_k(t)-\dfrac{P_{\text{tot}k}}{K})/(\theta_k(0)-\dfrac{P_{\text{tot}k}}{K})\right]$ est une droite, où $\theta_k(t) = T_{ik}(t) -$

$T_{ekm}$' avec $T_{ekm}$' la moyenne des mesures de température de l'air extérieur $T_{ek}$ sur l'intervalle de temps $\Delta t_k$'.

Le principe à la base de l'invention est d'utiliser les variations transitoires de la température intérieure du local soumis à des sollicitations internes contrôlées et dans un environnement externe mesuré. L'analyse quantitative de la variation de la température intérieure du local permet de déterminer quantitativement la qualité énergétique du local sur une période courte, s'étendant sur quelques heures, en limitant le nombre de paramètres susceptibles d'influencer le comportement thermique du local. En particulier, la brièveté des mesures permet de s'affranchir de l'influence des conditions d'utilisation du local et des variations des conditions climatiques extérieures.

Bien entendu, le procédé selon l'invention ne requiert pas nécessairement la mise en place d'une représentation graphique de l'évolution $T_{ik}(t)$.

En particulier, dans le cas où il existe un intervalle de temps $\Delta t_k$ pour lequel l'évolution $T_{ik}(t)$ est sensiblement linéaire, la pente $\alpha_k$ de la tangente à la courbe $T_{ik}(t)$ sur l'intervalle de temps $\Delta t_k$ est égale à la dérivée de l'évolution $T_{ik}(t)$ sur cet intervalle $\Delta t_k$. Dès lors, l'étape de détermination de la pente $\alpha_k$ de la tangente à la courbe $T_{ik}(t)$ sur l'intervalle de temps $\Delta t_k$ peut être réalisée, dans le cadre de l'invention, en calculant la dérivée de l'évolution $T_{ik}(t)$ sur l'intervalle de temps $\Delta t_k$, sans recourir à une représentation graphique de l'évolution $T_{ik}(t)$.

De la même façon, dans le cas où il n'existe pas d'intervalle de temps pour lequel l'évolution $T_{ik}(t)$ est sensiblement linéaire, la détermination de la valeur du coefficient de déperdition thermique K du local telle que la courbe

$$Ln\left[(\theta_k(t)-\frac{P_{\text{tot}k}}{K})/(\theta_k(0)-\frac{P_{\text{tot}k}}{K})\right]$$ est une droite ne met pas forcément en jeu une représentation graphique de cette courbe, et peut passer par une linéarisation mathématique de l'évolution

$$Ln\left[(\theta_k(t)-\frac{P_{\text{tot}k}}{K})/(\theta_k(0)-\frac{P_{\text{tot}k}}{K})\right].$$

Les étapes de calcul du procédé, en particulier pour la détermination des pentes $\alpha_k$ ou pour la linéarisation de l'évolution $Ln\left[(\theta_k(t)-\dfrac{P_{\text{tot}k}}{K})/(\theta_k(0)-\dfrac{P_{\text{tot}k}}{K})\right]$, peuvent être mises en oeuvre à l'aide de tout moyen de calcul approprié. Il peut s'agir notamment d'une unité de calcul électronique comportant à la fois des moyens pour acquérir les mesures de température à l'intérieur du local $T_{ik}$ et des moyens pour calculer le coefficient de déperdition thermique K du local à partir de ces mesures.

Selon l'invention, on entend par "puissance de chauffage du local" toute condition opératoire générant une variation de la température intérieure du local pour des conditions de température extérieure données. Il est entendu que la puissance de chauffage $P_{\text{tot}k}$ peut être positive, nulle ou négative. Une puissance de chauffage positive correspond à un apport de chaleur dans le local, alors qu'une puissance de chauffage négative correspond à un apport de froid dans le local. Dans le cas d'une puissance de chauffage nulle, la variation de la température intérieure du local peut résulter d'une différence entre la température intérieure du local et la température extérieure, ou encore d'une variation de la température extérieure. Suivant l'invention, il est prévu que l'une au moins des puissances de chauffage $P_{\text{tot}k}$ est non nulle.

De manière avantageuse, pour chaque période de temps $D_k$, la puissance $P_{\text{tot}k}$ de chauffage du local comprend une puissance de chauffe $P_{\text{imp}k}$ imposée au moyen d'une source de puissance contrôlée. Si aucune source de puissance autre que celle utilisée pour appliquer la puissance de chauffe imposée $P_{\text{imp}k}$ n'est active dans le local au cours de la période de temps $D_k$, la puissance totale $P_{\text{tot}k}$ de chauffage du local est égale à la puissance de chauffe imposée $P_{\text{imp}k}$. Si en revanche il existe, au cours de la période $D_k$, une puissance supplémentaire $P_{\text{sup}k}$ dans le local en plus de la puissance $P_{\text{imp}k}$, la puissance totale de chauffage du local est égale à $P_{\text{imp}k}+P_{\text{sup}k}$. En particulier, dans le cas où le rayonnement solaire sur la période de temps $D_k$ est important, la contribution du rayonnement solaire au chauffage du local fait partie de la puissance supplémentaire $P_{\text{sup}k}$.

En pratique, les conditions de mise en oeuvre du procédé sont adaptées pour limiter les apports de puissance supplémentaires $P_{\text{sup}k}$ autres que la puissance de chauffe imposée $P_{\text{imp}k}$, notamment en veillant à ce que le local soit inoccupé.

De manière avantageuse, le procédé est mis en oeuvre sur des périodes de temps $D_k$ pour lesquelles le rayonnement solaire est faible, de préférence nul. De manière préférée, le procédé est mis en oeuvre sur des périodes de temps $D_k$ choisies pendant la nuit, ou éventuellement en journée le matin ou le soir. Il est ainsi possible de réduire la contribution du rayonnement solaire et de limiter les fluctuations de la température de l'air extérieur.

Les périodes de temps $D_k$ peuvent être soit disjointes, soit immédiatement successives les unes aux autres. Dans ce dernier cas, on peut considérer que le procédé est réalisé dans sa globalité sur une période de temps continue, formée par la succession des périodes de temps $D_k$ De manière préférée, en vue de limiter le temps de mise en oeuvre du procédé tout en réduisant la contribution du rayonnement solaire, le procédé est réalisé dans sa globalité en continu sur une seule période nocturne.

De préférence, sur chaque période de temps $D_k$, tout système de ventilation fixe équipant le local est désactivé et toutes les prises de ventilation sont fermées ou bouchées, de manière à limiter les échanges d'air avec l'extérieur.

En variante, les systèmes de ventilation fixes du local peuvent fonctionner au cours du procédé sur chaque période de temps $D_k$. Cela introduit toutefois un terme supplémentaire de renouvellement d'air dans l'expression du coefficient de déperdition thermique $K$ :

$$K = \mathrm{H}_{\mathrm{T}} + \mathrm{m'}_1 . \mathrm{Cp} + \mathrm{m'}_2 . \mathrm{Cp} \, ,$$

où $\mathrm{m'}_1$ le débit de renouvellement de l'air par infiltration et $\mathrm{m'}_2$ le débit de renouvellement de l'air dû aux systèmes de ventilation fixes sont corrélés, la valeur de l'un dépendant de la valeur de l'autre.

Le procédé selon l'invention repose sur une modélisation du local sous forme d'une boîte isotherme caractérisée, d'une part, par son coefficient de déperdition thermique $K$, et, d'autre part, par son inertie ou sa capacité thermique effective $C$. La capacité thermique effective $C$ d'un local, qui correspond à la capacité thermique des matériaux situés dans l'enveloppe isolante du local, est définie comme l'énergie nécessaire pour augmenter la température ambiante du local de 1 K à température extérieure constante.

De manière générale, pour chaque période de temps $D_k$, le bilan énergétique du local s'écrit :

$$K(T_{ik} - T_{ek}) + C \frac{d(T_{ik} - T_{ek})}{dt} = P_{\mathrm{tot}k} \qquad (1)$$

avec

$K$ le coefficient de déperdition thermique du local,
$T_{ik}(t)$ la température intérieure du local,
$T_{ek}(t)$ la température de l'air extérieur,
$C$ la capacité thermique effective du local,
$P_{\mathrm{tot}k}$ la puissance totale de chauffage du local.

L'équation (1) admet pour solution :

$$T_{ik}(t) - T_{ek}(t) = \frac{P_{\mathrm{tot}k}}{K} + \left[ \left( T_{ik}(0) - T_{ek}(0) \right) - \frac{P_{\mathrm{tot}k}}{K} \right] e^{\frac{-K.t}{C}}$$

Cette solution peut être linéarisée aux temps courts :

$$T_{ik}(t) - T_{ek}(t) = \frac{P_{\mathrm{tot}k}}{K} + \left[ \left( T_{ik}(0) - T_{ek}(0) \right) - \frac{P_{\mathrm{tot}k}}{K} \right] \left[ \frac{-K.t}{C} \right]$$

La pente $\alpha_k$ la tangente à la courbe représentative de l'évolution de la grandeur $T_{ik}$-$T_{ek}$ en fonction du temps est alors :

$$\alpha_k = \frac{P_{\mathrm{tot}k}}{C} - \left( T_{ik}(0) - T_{ek}(0) \right) \frac{K}{C}$$

En pratique, dans le cadre du procédé de l'invention, on recherche dans la période de temps $D_k$ un intervalle

de temps $\Delta t_k$ pour lequel l'évolution $T_k (t)$ est sensiblement linéaire. Sur cet intervalle de temps $\Delta t_k$, on peut considérer que la température de l'air extérieur $T_{ek}$ est sensiblement constante et égale à la température moyenne sur l'intervalle de temps $\Delta t_k$, notée $T_{ekm}$. En outre, comme on sélectionne un intervalle de temps $\Delta t_k$ dans la période de chauffe $D_k$, le positionnement exact du temps t = 0 par rapport à la période de chauffe est arbitraire et il est préférable de considérer une valeur moyenne $T_{km}$ de $T_{ik}(t)$ sur l'intervalle de temps $\Delta t_k$ dans l'expression de la pente $\alpha_k$. Dès lors, la pente $\alpha_k$ de la courbe $\theta_k(t) = T_{ik}(t)\text{-}T_{ekm}$ sur l'intervalle de temps $\Delta t_k$, qui est égale à la pente de la courbe $T_{ik}(t)$ sur l'intervalle de temps $\Delta t_k$, est, dans cette approximation linéaire :

$$\alpha_k = \frac{P_{\text{tot}k}}{C} - \theta_{km}\frac{K}{C} \text{ , avec } \theta_{km} = T_{ikm} - T_{ekm}$$

Si la valeur de la capacité thermique effective du local $C$ est connue, on accède ainsi directement à la valeur du coefficient de déperdition thermique $K$ du local.

Si la valeur de la capacité thermique effective du local $C$ n'est pas connue, il est possible d'accéder à la valeur du coefficient de déperdition thermique $K$ du local en appliquant sur deux périodes de temps successives, deux puissances de chauffe $P_{imp1}$ et $P_{imp2}$ de valeurs différentes, et en mesurant l'évolution d'au moins une température à l'intérieur du local $T_{i1}(t)$ ou $T_{i2}(t)$ sur chacune de ces deux périodes de temps. La valeur du coefficient $K$ peut alors être obtenue en sélectionnant un intervalle de temps $\Delta t_1$ ou $\Delta t_2$ pour lequel l'évolution $T_{i1}(t)$ ou $T_{i2}(t)$ est sensiblement linéaire, et en déterminant, sur cet intervalle de temps $\Delta t_1$ ou $\Delta t_2$, la pente $\alpha_1$ ou $\alpha_2$ de la tangente à la courbe $(T_{ik}(t))_{k=1 \text{ ou } 2}$. Le rapport des pentes $\dfrac{\alpha_1}{\alpha_2}$ conduit à la valeur du coefficient de déperdition thermique $K$ du local en faisant disparaître la dépendance vis-à-vis de la capacité thermique effective du local $C$ :

$$\frac{\alpha_1}{\alpha_2} = \frac{P_{\text{tot}1} - \theta_{1m}.K}{P_{\text{tot}2} - \theta_{2m}.K} \qquad (2).$$

Plus précisément, le procédé de détermination du coefficient de déperdition thermique $K$ du local comprend alors des étapes dans lesquelles :

- on procède, dans le local inoccupé et sur deux périodes de temps $D_1$ et $D_2$ successives :

    i. sur la première période de temps $D_1$, à l'application d'une première puissance de chauffe imposée $P_{imp1}$ du local au moyen d'une source de puissance contrôlée, et à une campagne de mesures d'au moins une température à l'intérieur du local $T_{i1}$ à intervalles de temps rapprochés, ainsi qu'à la détermination de la température de l'air extérieur $T_{e1}$ auxdits mêmes temps rapprochés, puis
    ii. sur la deuxième période de temps $D_2$, à l'application d'une deuxième puissance de chauffe imposée $P_{imp2}$ du local au moyen d'une source de puissance contrôlée, où la deuxième puissance de chauffe imposée $P_{imp2}$ est différente de la première puissance $P_{imp1}$, et à une campagne de mesures d'au moins une température à l'intérieur du local $T_{i2}$ à intervalles de temps rapprochés, ainsi qu'à la détermination de la température de l'air extérieur $T_{e2}$ auxdits mêmes temps rapprochés;

- pour chacune des première et deuxième périodes de temps $D_1$ et $D_2$, on sélectionne un intervalle de temps $\Delta t_1$ ou $\Delta t_2$ pour lequel l'évolution $T_{i1}(t)$ ou $T_{i2}(t)$ est sensiblement linéaire et on détermine, sur cet intervalle de temps $\Delta t_1$ ou $\Delta t_2$, la pente $\alpha_1$ ou $\alpha_2$ de la tangente à la courbe $(T_{ik}(t)_{k=1 \text{ ou }} 2$;

- on déduit la valeur du coefficient de déperdition thermique $K$ du local à partir du rapport des pentes $\dfrac{\alpha_1}{\alpha_2}$.

Selon une caractéristique de l'invention, la différence entre les puissances de chauffe imposées $P_{imp1}$ et $P_{imp2}$ est maximisée. De manière avantageuse, l'une parmi les puissances $P_{imp1}$ et $P_{imp2}$ est une puissance nulle, alors que l'autre puissance est une puissance strictement positive permettant d'obtenir une variation de la température intérieure $T_{ik}$ d'au moins 1°C sur un intervalle de temps $\Delta t_k$ pour lequel l'évolution $T_{ik}(t)$ est sensiblement linéaire. Sur la période de temps correspondant à l'application de la puissance de chauffe imposée non nulle, on mesure la montée en température du local en fonction du temps. Sur la période de temps correspondant à l'application de la puissance de chauffe imposée nulle, ce qui correspond à une absence de chauffage dans le local, on mesure la descente en température du local en fonction du temps. Le coefficient de déperdition thermique $K$ du local est alors déterminé à partir du rapport des pentes des courbes de montée et de descente en température du local.

De préférence, pour chaque période de temps $D_k$, la campagne de mesures de la température intérieure du local $T_{ik}$ est réalisée sur une période de temps suffisante pour obtenir une variation de la température intérieure $T_{ik}$ d'au moins 1°C, de préférence comprise entre 1°C et 10°C.

A titre d'exemple, on peut procéder successivement à l'application de la première puissance de chauffe imposée $P_{imp1}$ nulle, correspondant à une absence de chauffage dans le local, puis à l'application de la deuxième puissance de chauffe imposée $P_{imp2}$ non nulle.

En variante, la puissance de chauffe imposée non nulle, qui génère une montée en température, peut être appliquée préalablement à la puissance de chauffe imposée nulle, c'est-à-dire l'arrêt du chauffage dans le local, qui génère une descente en température.

Selon une caractéristique avantageuse, la source de puissance contrôlée pour le chauffage du local peut être un équipement fixe du local, c'est-à-dire un moyen de chauffage installé dans le local indépendamment de la mise en oeuvre du procédé, sous réserve que ce moyen de chauffage soit suffisamment puissant pour assurer un chauffage rapide du local et que la puissance délivrée puisse être mesurée de manière précise.

Il peut notamment s'agir d'une pompe à chaleur dont le coefficient de performance (COP) est connu. Le COP, qui est le rapport entre la puissance thermique produite et la puissance électrique consommée, est habituellement de l'ordre de 3 à 5. Le COP varie avec les températures des sources froide et chaude. Or, si la source chaude est régulée et présente une température sensiblement constante, la source froide est quant à elle généralement prise à l'extérieur et n'est donc pas contrôlable. La détermination de la température de la source froide extérieure sur une période de temps encadrant la période de mise en oeuvre du procédé de l'invention permet d'ajuster la valeur du COP de manière plus précise.

En variante, la source de puissance contrôlée pour le chauffage du local peut être une source rapportée dans le local spécifiquement pour la mise en oeuvre du procédé.

Les éléments de chauffage du local peuvent être de type convectif, conductif ou radiatif, ou combiner plusieurs de ces technologies. De préférence, les éléments de chauffage sont des appareils électriques, ce qui permet de déterminer la puissance de chauffe de manière directe et précise. Des exemples d'appareils de chauffage électriques comprennent notamment des appareils de type convectif mettant en jeu le soufflage d'air chauffé au moyen de résistances électriques; des couvertures chauffantes ou des films chauffants, en particulier déposés contre les parois du local; des parasols radiants. En variante, les éléments de chauffage peuvent être des appareils fonctionnant au gaz ou au fuel, pour autant que les rendements des brûleurs et les débits de combustible puissent être estimés de manière suffisamment précise pour accéder à la puissance de chauffe.

De manière avantageuse, lorsque les éléments de chauffage du local sont de type convectif, on peut combiner ces éléments de chauffage, qui assurent la dissipation de chaleur, avec au moins un ventilateur, qui assure une bonne répartition spatiale de la chaleur. Un tel ensemble de chauffage combinant éléments de chauffage de type convectif et ventilateurs permet de garantir un chauffage homogène du local.

De préférence, la source pour le chauffage du local est choisie pour permettre un chauffage qui assure que la température moyenne des parois à l'intérieur du local est sensiblement égale à la température de l'air ambiant à l'intérieur du local. En pratique, cette condition est remplie lorsque les éléments de chauffage, fixes ou rapportés dans le local spécifiquement pour le procédé, chauffent directement la masse du local, c'est-à-dire la capacité thermique du local, et pas seulement l'air à l'intérieur du local. Un chauffage direct de la masse du local, qui peut être obtenu par exemple au moyen d'un système fixe de chauffage par le sol du local, ou encore au moyen de films chauffants rapportés sur le sol du local, est donc généralement préférable à un chauffage de type convectif qui chauffe en priorité l'air à l'intérieur du local.

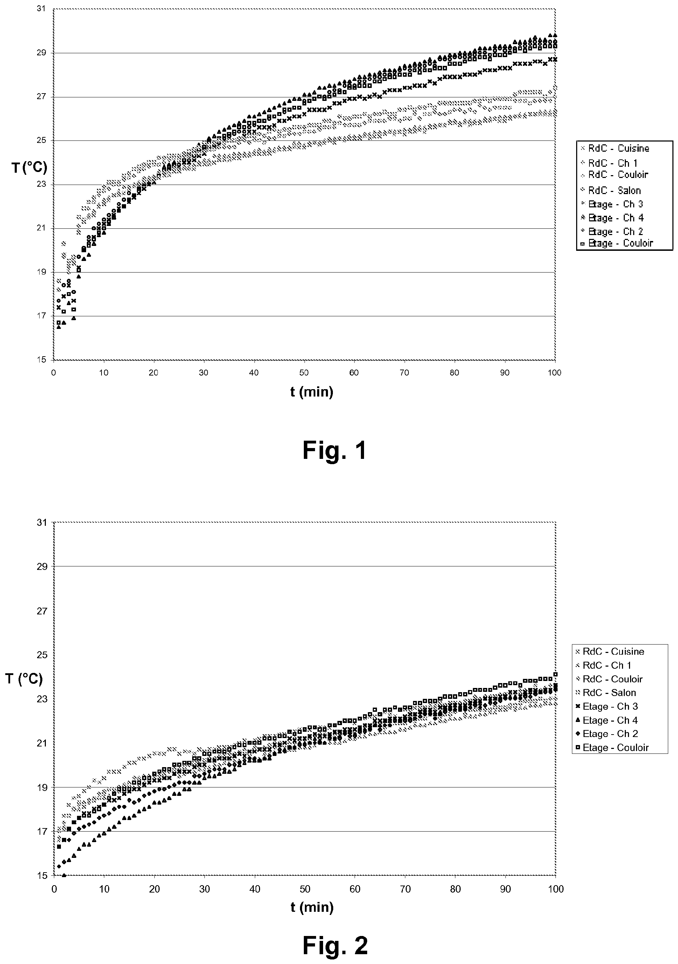

Les figures 1 et 2 en annexe illustrent les avantages, pour obtenir un chauffage homogène d'un local, de l'utilisation d'un système de chauffage qui chauffe directement la masse du local, plutôt qu'un système de chauffage de type convectif. Ces figures montrent les courbes de montée en température de l'air dans différentes pièces d'une maison à un étage de type T5, respectivement dans le cas d'un chauffage au moyen de convecteurs électriques pour la figure 1 et dans le cas d'un chauffage au moyen de films chauffants électriques pour la figure 2.

Dans le cas de la figure 1, un convecteur électrique est placé au centre de chaque pièce mesurée de la maison, avec une consigne en température de 31°C. Dans le cas de la figure 2, le sol de chaque pièce mesurée de la maison est recouvert de films chauffants de puissance 150 W/m$^2$, commercialisés par la société DOMOTECK dans la gamme "Aluminium Mat", avec une consigne en température de 31°C. Les résultats des figures 1 et 2 correspondent à une même puissance totale de chauffage dissipée dans la maison, respectivement par les convecteurs électriques pour la figure 1 et par les films chauffants pour la figure 2. Pour les figures 1 et 2, les mesures de température sont réalisées, dans chaque pièce mesurée de la maison, à l'aide d'un thermocouple positionné dans l'air ambiant au centre de la pièce à 160 cm de hauteur.

Comme il ressort d'une comparaison des figures 1 et 2, le chauffage par films chauffants permet d'atteindre une meilleure homogénéité en température dans l'ensemble des pièces de la maison que le chauffage convectif. En particulier, avec le chauffage par films chauffants, on observe moins de disparités entre les températures des pièces du rez-de-chaussée, d'une part, et les températures des pièces de l'étage, d'autre part. On note également que les pentes des courbes de montée en température sont plus homogènes d'une pièce à une autre avec le chauffage par films chauffants, ce qui est particulièrement recherché dans le cadre du procédé selon l'invention. Ces deux avantages, que sont la meilleure homogénéité en température et la meilleure homogénéité des pentes de montée en température, proviennent du fait que la masse de la maison est chauffée directement dans le cas du chauffage par films chauffants.

Selon une caractéristique avantageuse, chaque campagne de mesures de la température à l'intérieur du local comprend des mesures de la température ambiante à l'intérieur du local, des mesures de la température de parois du local et/ou des mesures de la température moyenne radiante à l'intérieur du local. En pratique, toute méthode de mesures connue peut être utilisée pour accéder à ces températures, en particulier les méthodes de mesures décrites dans la norme NF EN ISO 7726. A titre d'exemple, les mesures de la température ambiante à l'intérieur du local et de la température des parois du local peuvent être réalisées à l'aide de thermocouples ou, de préférence, de sondes Pt100. Pour les mesures de la température moyenne radiante à l'intérieur du local, un thermomètre à globe noir peut avantageusement être utilisé.

De préférence, on mesure au moins la température d'une paroi à l'intérieur du local. Lorsque le chauffage du local assure que la température ambiante est suffisamment proche de la température des parois à l'intérieur du local, ce qui peut être obtenu notamment avec un chauffage qui chauffe en priorité la masse du local, une mesure de la température ambiante à l'intérieur du local peut être substituée à la mesure de la température de paroi à l'intérieur du local.

Si le chauffage du local est bien homogène, de sorte que la température intérieure est la même dans tout le local, ou dans toutes les pièces du local si celui-ci comporte des cloisons internes, alors les mesures de la température à l'intérieur du local peuvent se limiter à des mesures à l'intérieur d'une seule pièce du local.

Si le procédé de l'invention est mis en oeuvre dans un local pour lequel le chauffage est moins homogène, il peut être envisagé de mesurer la température dans plusieurs pièces du local et de considérer que la température à l'intérieur du local à chaque temps t est la moyenne des mesures de température obtenues au temps t dans les différentes pièces du local, à condition que celles-ci ne soient pas trop différentes, ce qui indiquerait un manque de ventilation du local. Il est également possible de prévoir plusieurs mesures de températures différentes dans chaque pièce du local. Ainsi, on peut prévoir de réaliser dans chaque pièce à la fois une mesure de la température ambiante et/ou une mesure de la température d'une paroi de l'enveloppe du local et/ou une mesure de la température moyenne radiante.

Selon une caractéristique avantageuse, la détermination de la température de l'air extérieur $T_{ek}$ s'opère, dans le cadre du procédé de l'invention, par le biais d'une campagne de mesures simultanées aux mesures de la température intérieure du local $T_{ik}$, c'est-à-dire aux mêmes temps rapprochés.

En variante, la détermination de la température de l'air extérieur $T_{ek}$ à ces temps rapprochés peut être obtenue par interpolation de données météorologiques du lieu du local.

De préférence, le procédé selon l'invention est mis en oeuvre sur une période de temps pour laquelle la température de l'air extérieur $T_{ek}$ est stable.

Lorsque la variation de la température de l'air extérieur $T_{ek}(t)$ est importante pendant la mise en oeuvre du procédé, il est possible de tenir compte de cette variation en l'assimilant à une évolution linéaire, ce qui se traduit par une non-linéarité de l'évolution de la température intérieure du local $T_{ik}(t)$. On peut alors modéliser la courbe $\theta_k(t) = T_{ik}(t)\text{-}T_{ek}(t)$ comme un polynôme du second degré dont les coefficients font intervenir les caractéristiques $K$ et $C$ du local. Dans ce cas, il est possible de déterminer $K$ et $C$ en appliquant une seule puissance imposée $P_{impk}$ de chauffage du local, avec une seule campagne de mesures de la température à l'intérieur du local $T_{ik}$, car, en développant la solution de l'équation (1) au deuxième ordre, on obtient une égalité entre deux polynômes du second degré, avec une égalité pour le terme en t et une égalité pour le terme en $t^2$. Une telle démarche est toutefois moins préférée, en raison de sa plus grande complexité.

Comme expliqué précédemment, le coefficient de déperdition thermique $K$ déterminé conformément à l'invention intègre les contributions des pertes thermiques par transmission et des infiltrations d'air, c'est-à-dire :

$$K = \text{H}_\text{T} + \text{m'.Cp} = \text{UA}_\text{T} + \text{m'.Cp}$$

Si l'on souhaite accéder au coefficient de transmission thermique U du local, il est possible de découpler la contribution des pertes thermiques par transmission, d'une part, et celle des infiltrations d'air, d'autre part, en évaluant le débit de renouvellement de l'air m' dans le local.

Lorsqu'aucun système de ventilation fixe du local n'est actif au cours du procédé de détermination du coefficient $K$, le débit m' est égal au débit de renouvellement de l'air par infiltration. Ce débit m' peut être déterminé par toute méthode appropriée, notamment par une méthode de détection par gaz traceurs ou par un test d'infiltrométrie à porte soufflante.

De manière avantageuse, la méthode de détection par gaz traceurs fournit une valeur instantanée du débit m'. Cette méthode par gaz traceurs permet également de prendre en compte de manière précise la contribution de la ventilation dans le bilan énergétique du local, ce qui est avantageux dans les cas où le procédé est mis en oeuvre alors qu'un système de ventilation équipant le local est actif, en particulier dans les cas où il n'est pas possible de désactiver, préalablement à la mise en oeuvre du procédé, les systèmes de ventilation fixes équipant le local.

Si on opte pour un test de porte soufflante, il est possible de calculer une valeur moyenne du débit m' à partir de la valeur mesurée du débit de fuite.

A titre d'exemple, si on réalise un test de porte soufflante dans lequel on mesure l'indicateur n50 tel qu'il est défini dans la norme NF EN 13829, c'est-à-dire le débit de fuite sous 50 Pa divisé par le volume chauffé du local, il est connu de déduire la valeur du débit de renouvellement d'air m' à partir de la valeur mesurée du n50, en utilisant la règle établie par Drubul : $\mathrm{m'} = \dfrac{\mathrm{n50}.V}{20}$ (3), où $V$ est le volume chauffé du local.

En variante, la valeur moyenne du débit de renouvellement d'air m' peut être obtenue à partir de la mesure d'indicateurs autres que l'indicateur n50, ou encore à l'aide de méthodes de calcul réglementaires autres que celle mettant en jeu la relation (3) ci-dessus. En particulier, une approche alternative à la règle de Drubul pour déterminer la valeur du débit de renouvellement d'air m' à partir de la valeur mesurée du n50 consiste à estimer le taux d'infiltration d'air basé sur le modèle empirique proposé dans la norme NF EN ISO 13790, annexe G.

Lorsqu'un système de ventilation fixe du local est actif au cours du procédé de détermination du coefficient K, le débit m' incorpore la contribution de renouvellement d'air dû à ce système de ventilation, qu'il convient de prendre en compte en plus du renouvellement d'air par infiltration. Le débit de renouvellement d'air dû au système de ventilation fixe peut être déterminé par la mesure du débit d'air au niveau de chaque bouche de ventilation.

Lorsque les essais sont réalisés en chauffant préférentiellement la masse plutôt que l'air intérieur du local, ou lorsque le coefficient de déperdition thermique est calculé à l'aide de températures de paroi plutôt que de températures de l'air ambiant, le coefficient de déperdition calculé $K_{calc}$ n'est pas parfaitement représentatif des déperditions réelles, car il ne prend pas en compte l'échange de chaleur entre la paroi et l'air ambiant. Cela peut être partiellement corrigé en déterminant le coefficient d'échange convecto-radiatif $h_i$. Le coefficient $h_i$ peut être estimé par la connaissance des températures intérieures ambiante et de globe noir du local, ainsi que de la vitesse d'air, à partir de la relation suivante, définie dans la RT 2005: $h_i = 2,5 + 4.\sigma.\varepsilon_i.T_{mi}^3$, où $T_{mi}$ est la température moyenne radiante qui, conformément à la norme NF EN ISO 7726, est reliée, pour un globe standard de diamètre 85 mm et d'émissivité 0,95, à la température de globe $T_g$, la température ambiante $T_a$ et la vitesse de l'air $v_a$ :

$$T_{mi} = \left[ (T_g + 273)^4 + 2,5 \times 10^8 \times v_a^{0,6} (T_g - T_a) \right]^{1/4} - 273$$

En variante, si la température moyenne radiante $T_{mi}$ n'est pas disponible, le coefficient d'échange convectif $h_i$ peut être supposé connu. En particulier, le coefficient d'échange convectif $h_i$ peut être estimé comme étant de l'ordre de 8 W/m$^2$.K, qui est l'ordre de grandeur donné par la RT 2005 dans les règles Th-U.

Le coefficient de déperdition corrigé $K_{corr}$ vaut alors :

$$\frac{1}{K_{corr}} = \frac{1}{K_{calc}} + \frac{1}{h_i A_T} \qquad (4).$$

L'invention a également pour objet un dispositif pour la mise en oeuvre d'un procédé tel que décrit ci-dessus, comprenant au moins un capteur de température qui mesure une température à l'intérieur du local $T_{ik}$ et un dispositif de chauffage homogène du local comportant une source de puissance contrôlée.

Selon une caractéristique avantageuse d'un tel dispositif, le dispositif de chauffage chauffe directement la masse du local, c'est-à-dire la capacité thermique du local et pas seulement l'air à l'intérieur du local, et le capteur de température mesure la température dans l'air à l'intérieur du local. Comme mentionné précédemment, des exemples de dispositifs de chauffage qui chauffent directement la masse du local comprennent des films chauffants rapportés sur le sol du local ou encore des systèmes fixes de chauffage par le sol du local.

La sélection d'un dispositif qui combine un chauffage direct de la masse du local et une mesure de la température dans l'air à l'intérieur du local est particulièrement avantageuse pour la mise en oeuvre du procédé selon l'invention. En effet, si l'on choisit de réaliser des mesures de température de paroi, il est nécessaire, pour obtenir une bonne estimation de la température moyenne dans une pièce, de réaliser des mesures de températures sur plusieurs parois de la pièce, puis de déterminer une moyenne de ces températures de parois, et ce quelle que soit l'homogénéité du chauffage. Au contraire, si l'on choisit de réaliser des mesures de température d'air, une seule mesure dans le volume d'air sensiblement au centre de la pièce suffit à obtenir une valeur représentative de la température moyenne dans la pièce, à condition que le chauffage soit suffisamment homogène. La mesure de température dans l'air permet donc de réduire le nombre de mesures à effectuer dans le cadre du procédé selon l'invention, pour autant qu'elle est réalisée dans une pièce chauffée de manière globalement homogène. Or, comme expliqué précédemment, un chauffage homogène est obtenu plus facilement et plus rapidement avec un dispositif de chauffage qui chauffe directement la masse du local, plutôt qu'avec un dispositif de chauffage convectif qui chauffe en priorité l'air à l'intérieur du local. Dès lors, grâce à la combinaison d'un chauffage direct de la masse du local et d'une mesure de la température dans l'air à l'intérieur du local, la mise en oeuvre du procédé selon l'invention est simplifiée et sa durée est limitée.

Selon une autre caractéristique avantageuse, le dispositif comprend en outre une unité centrale électronique comportant des moyens pour acquérir les mesures de température à l'intérieur du local, des moyens pour calculer le coefficient de déperdition thermique K du local à partir des mesures de température acquises et des moyens de contrôle automatique de la source de puissance en fonction des mesures de température acquises.

Un tel dispositif de contrôle automatique utilise les signaux de température acquis, non seulement pour calculer le coefficient de déperdition thermique $K$ du local, mais également pour piloter de manière automatique la source de puissance assurant le chauffage du local. De manière avantageuse, le traitement des informations de température est assuré par l'unité centrale électronique, laquelle est associée à un logiciel de contrôle interne au dispositif qui est paramétré de telle sorte que toute évolution de température correspondant à des critères prédéfinis du procédé selon l'invention, notamment des critères décrivant la linéarité de l'évolution $T_{ik}(t)$ sur un intervalle de temps, la stabilité de la température de l'air extérieur $T_{ek}$, etc., permet de contrôler l'intensité de la puissance de chauffe dans le local.

A titre d'exemple, un test susceptible d'être lancé de manière autonome par un tel dispositif de contrôle automatique comprend la séquence d'étapes suivante :

- 	lancement de la procédure;
- 	mise en fonctionnement du dispositif de chauffage ;
- 	lorsque l'évolution $T_{i1}(t)$ de la température mesurée à l'intérieur du local au cours du chauffage du local est sensiblement linéaire et la température de l'air extérieur $T_{e1}$ est stable en regard des critères prédéfinis, calcul et stockage de la valeur de la pente $\alpha_1$ de la tangente à la courbe de chauffage $T_{i1}(t)$ et arrêt du dispositif de chauffage;
- 	lorsque l'évolution $T_{i2}(t)$ de la température mesurée à l'intérieur du local au cours du refroidissement du local est sensiblement linéaire et la température de l'air extérieur $T_{e2}$ est stable en regard des critères prédéfinis, calcul et stockage de la valeur de la pente $\alpha_2$ de la tangente à la courbe de refroidissement $F_{i2}(t)$;
- 	à partir des valeurs stockées des pentes $\alpha_1$ et $\alpha_2$, calcul du coefficient de déperdition thermique $K$ du local.

Le dispositif de chauffage du dispositif de contrôle automatique peut être un dispositif de chauffage lié au local testé ou un dispositif de chauffage adjoint spécifiquement pour la réalisation des essais. De même, les capteurs de mesure de température du dispositif de contrôle automatique peuvent être liés au local ou additionnels. Comme expliqué précédemment, les capteurs de mesure de température sont de préférence des capteurs de mesure de la température dans l'air à l'intérieur du local, plutôt que des capteurs de mesure de la température de parois à l'intérieur du local.

Selon une caractéristique avantageuse, le logiciel de contrôle interne au dispositif est conçu de telle sorte que chaque test lancé de manière autonome par le dispositif de contrôle automatique est lancé de préférence la nuit, et, si des mesures précédentes ont déjà été réalisées, le dispositif de contrôle automatique optimise le cycle de chaque test de façon à minimiser sa durée et à maximiser la précision de caractérisation.

De préférence, les critères du procédé utilisés par le dispositif de contrôle automatique tiennent compte de la précision de la mesure de température, c'est-à-dire de la précision de détermination de la pente de l'évolution de température. Plus la précision de la mesure est faible, plus le temps de mesure doit être long pour assurer une détermination de pente correcte. Lors des phases de refroidissement, le critère doit être défini de telle sorte que la pente en valeur absolue a une valeur maximale, toute pente quasi nulle étant à proscrire.

De manière avantageuse, dans le cas d'un dispositif utilisant des systèmes de chauffage et des capteurs internes au local, il peut être envisagé d'optimiser le pilotage du chauffage par le dispositif de contrôle automatique en fonction de l'occupation du local et de ses performances thermiques $K$ et $C$.

L'invention a également pour objet un support d'enregistrement d'informations, comportant des instructions pour la mise en oeuvre, dans le cadre d'un procédé tel que décrit ci-dessus :

- 	des étapes de calcul du coefficient de déperdition thermique $K$ du local à partir de mesures de température acquises, et
- 	des étapes de contrôle automatique de la source de puissance en fonction des mesures de température acquises,

lorsque ces instructions sont exécutées par une unité de calcul électronique.

Les caractéristiques et avantages de l'invention apparaîtront dans la description qui va suivre de plusieurs modes de réalisation d'un procédé et d'un dispositif selon l'invention, donnée uniquement à titre d'exemple et faite en se référant aux figures 3 à 8 annexées dans lesquelles :

- la figure 3 est une vue schématique d'une maison individuelle dont on souhaite déterminer le coefficient de déperdition thermique $K$ conformément à l'invention, cette maison étant équipée d'une pompe à chaleur comme source de puissance contrôlée qui alimente un système de chauffage par le sol ;
- la figure 4 est une courbe représentative de l'évolution de la température $T_{ik}$ à l'intérieur de la maison de la figure 3 en fonction du temps, au cours de la mise en oeuvre du procédé conforme à l'invention ;
- la figure 5 est une courbe représentative de l'évolution de la température $T_{i1}$ à l'intérieur de la maison de la figure 3 en fonction du temps, pour une première période de temps $D_1$ au cours de laquelle une puissance de chauffe imposée $P_{imp1}$ nulle est appliquée dans la maison, c'est-à-dire que cette première période de temps correspond à une absence de chauffage dans la maison ;
- la figure 6 est une courbe représentative de l'évolution de la température $T_{i2}$ à l'intérieur de la maison de la figure 3 en fonction du temps, pour une deuxième période de temps $D_2$ au cours de laquelle une puissance de chauffe imposée $P_{imp2}$ non nulle est appliquée dans la maison;
- la figure 7 est une vue schématique d'un bungalow dont on souhaite déterminer le coefficient de déperdition thermique $K$ conformément à l'invention, le chauffage du bungalow étant assuré par des convecteurs électriques; et

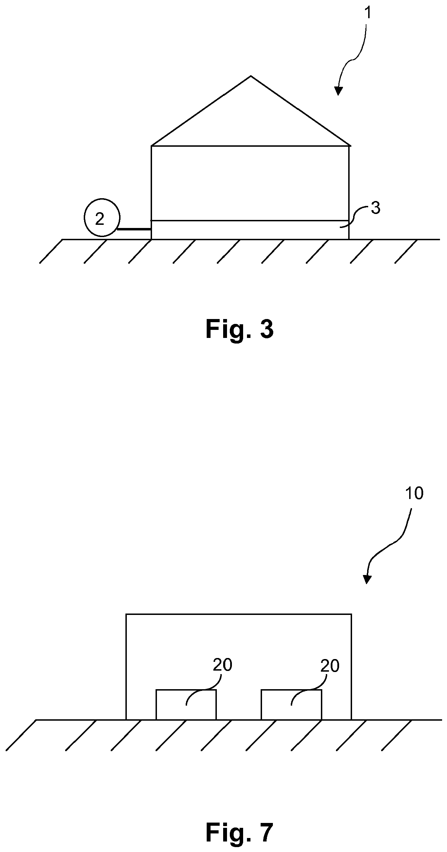

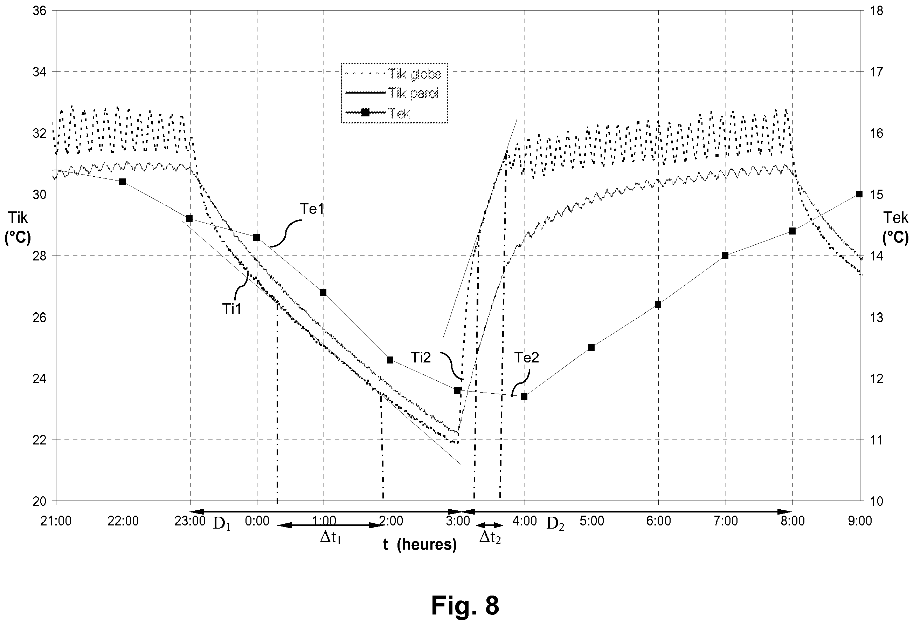

- la figure 8 est une courbe représentative de l'évolution de la température $T_{ik}$ à l'intérieur du bungalow de la figure 7 en fonction du temps au cours de la mise en oeuvre du procédé conforme à l'invention, montrant une première période de temps $D_1$ au cours de laquelle une puissance de chauffe imposée $P_{imp1}$ nulle est appliquée dans le bungalow, c'est-à-dire que cette première période de temps correspond à une absence de chauffage dans le bungalow, suivie d'une deuxième période de temps $D_2$ au cours de laquelle une puissance de chauffe imposée $P_{imp2}$ non nulle est appliquée dans le bungalow.

EXEMPLE 1

En référence à la figure 3, le procédé selon l'invention est mis en oeuvre pour la détermination du coefficient de déperdition thermique $K$ d'une maison individuelle 1 de construction récente, équipée d'une pompe à chaleur 2. La pompe à chaleur 2 alimente un système de chauffage par le sol 3 permettant un chauffage homogène de la maison. En particulier, le système 3 de chauffage par le sol assure un chauffage de la maison 1 tel que la température des parois à l'intérieur de la maison est sensiblement égale à la température de l'air ambiant à l'intérieur de la maison. Le coefficient de déperdition thermique $K$ de la maison 1 peut être recherché dans le cadre d'un diagnostic des performances énergétiques de la maison, par exemple pour vérifier que la maison 1 satisfait à certains labels de qualité en termes d'isolation thermique, tels que le label BBC ou le label Passivhaus.

La puissance de chauffe fournie par la pompe à chaleur 2 pour le chauffage de la maison est aisément déterminable, notamment à partir du COP de la pompe à chaleur comme expliqué précédemment. La pompe à chaleur 2 constitue donc une source de puissance contrôlée bien adaptée pour générer les impulsions de chauffage de la maison, c'est-à-dire les puissances de chauffe imposées $P_{impk}$, qui sont requises par le procédé de l'invention. Dans cet exemple, la valeur du COP de la pompe à chaleur 2 est égale à 4,23.

Le procédé pour la détermination du coefficient de déperdition thermique $K$ de la maison 1 est mis en oeuvre alors que la maison est inoccupée. Par ailleurs, la maison 1 est équipée d'un système de ventilation fixe comprenant deux VMC simple flux hygroréglables, qui ne sont pas désactivées lors de la mise en oeuvre du procédé. Toutefois, comme la maison 1 est inoccupée et les périodes de mesures du procédé sont relativement courtes, on peut considérer que ces VMC ne se déclenchent pas au cours du procédé.

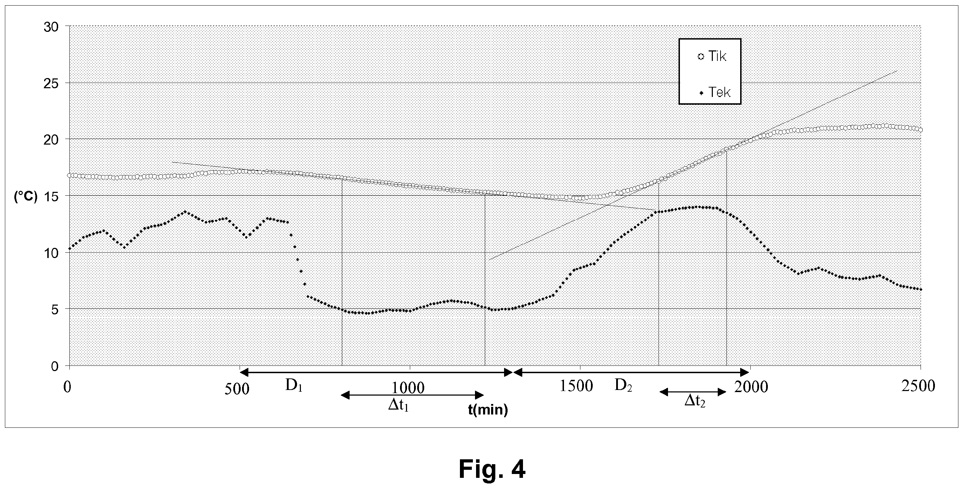

Comme mentionné précédemment, le procédé selon l'invention est mis en oeuvre préférentiellement en continu dans sa globalité sur une seule période de temps. C'est le cas pour l'exemple représenté sur les figures 4 à 6 puisque, comme bien visible sur la figure 4, la deuxième période de temps $D_2$ au cours de laquelle une puissance de chauffe imposée $P_{imp2}$ non nulle est appliquée dans la maison 1 est immédiatement consécutive à la première période de temps $D_1$ au cours de laquelle une puissance de chauffe imposée $P_{imp1}$ nulle est appliquée dans la maison.

Dans l'exemple des figures 4 à 6, le procédé a lieu sur une période de temps continue qui dure environ 1500 minutes, et qui commence en début de nuit et s'étend dans la journée suivante. Sur cette période de temps de 1500 minutes, le rayonnement solaire enregistré est faible car le temps était nuageux lors de la mise en oeuvre du procédé. En outre, tous les volets de la maison étaient clos lors de la mise en oeuvre du procédé. Dans ces conditions, la contribution du rayonnement solaire au chauffage de la maison 1 peut être négligée.

De plus, aucune source de puissance autre que celle utilisée pour l'application des impulsions de chauffage n'est active dans la maison 1 au cours du procédé. Ainsi, pour chaque période de temps $D_1$ et $D_2$, la seule puissance

à considérer dans le bilan énergétique est la puissance de chauffe imposée $P_{imp1}$ ou $P_{imp2}$.

Dans une première étape du procédé, qui correspond à la première période de temps $D_1$, on applique la première puissance de chauffe imposée $P_{imp1}$ nulle dans la maison 1, à partir d'une température de départ $T_{i1d}$ = 17°C, c'est-à-dire que le système de chauffage 3 ne fonctionne pas pendant cette période $D_1$. La température ambiante à l'intérieur de la maison $T_{i1}$ est alors mesurée toutes les dix minutes dans deux pièces différentes de la maison, à savoir une pièce principale et une chambre. A cet effet, un capteur de température est installé dans chacune de ces deux pièces, dans l'air ambiant à 180 cm de hauteur.

Dans cet exemple, l'évolution mesurée de la température ambiante à l'intérieur de la pièce principale et l'évolution mesurée de la température ambiante à l'intérieur de la chambre sont quasiment identiques. En effet, le chauffage de la maison 1 est particulièrement bien homogène, de sorte que la température ambiante est la même dans toutes les pièces de la maison. Sur les figures 4 à 6, seule l'évolution de la température ambiante à l'intérieur de la pièce principale est représentée, étant entendu que l'évolution de la température ambiante à l'intérieur de la chambre a un profil similaire.

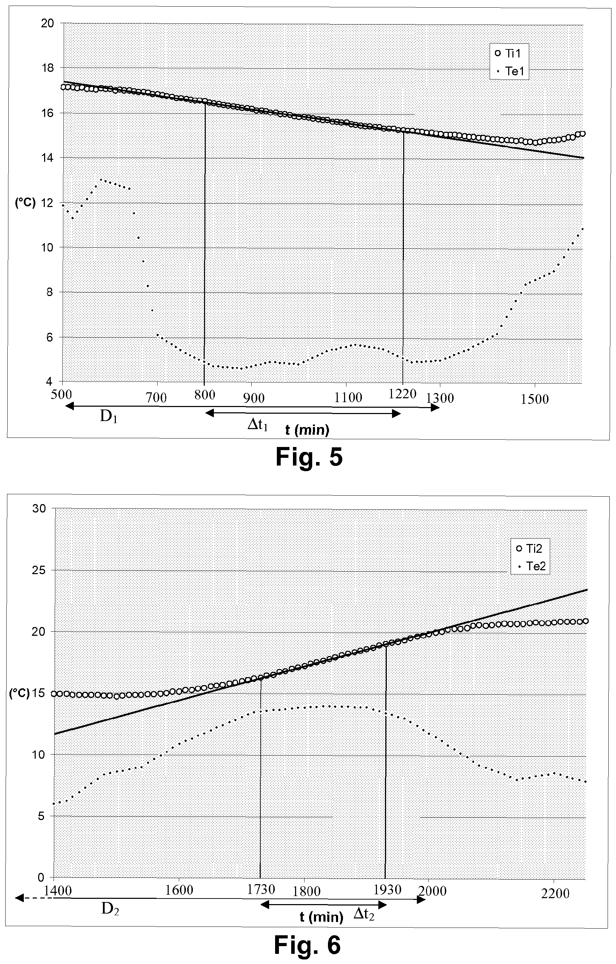

La courbe représentative de l'évolution de la température intérieure de la maison $T_{i1}$ en fonction du temps pendant la période de temps $D_1$ est montrée sur la figure 5. Comme visible sur cette figure, la courbe de descente en température de la maison 1 présente une partie sensiblement linéaire sur l'intervalle de temps $\Delta t_1$. La mise en équation de cette partie linéaire de la courbe donne: $T_{i1}$ = 16,5 °C - 0,003 (t - 800), avec t en minutes.

La figure 5 fait également apparaître l'évolution de la température de l'air extérieur $T_{e1}$ pendant la période de temps $D_1$. La température de l'air extérieur $T_{e1}$ sur l'intervalle de temps $\Delta t_1$ est suffisamment stable pour qu'on puisse la considérer sensiblement constante et égale à la température moyenne sur l'intervalle de temps $\Delta t_1$, à savoir dans cet exemple $T_{e1m}$ = 5°C.

Dans une deuxième étape du procédé, qui correspond à la deuxième période de temps $D_2$, on rétablit le chauffage dans la maison 1 en appliquant la deuxième puissance de chauffe imposées $P_{imp2}$ dans la maison 1, égale à la puissance maximale délivrée par la pompe à chaleur 2, soit $P_{imp2}$ = COP × 5000 W = 4,23 × 5000 W, à partir d'une température de départ $T_{i2d}$ = 15°C. Comme dans la première étape, la température ambiante à l'intérieur de la maison $T_{i2}$ est alors mesurée toutes les dix minutes, au moyen de deux capteurs de température installés respectivement dans la pièce principale et dans la chambre de la maison, à chaque fois dans l'air ambiant à 180 cm de hauteur. Ici encore, les mesures montrent que l'évolution de la température ambiante à l'intérieur de la pièce principale et l'évolution de la température ambiante à l'intérieur de la chambre sont quasiment identiques.

La figure 6 montre la courbe représentative de l'évolution de la température intérieure de la maison $T_{i2}$ en fonction du temps pendant la période de temps $D_2$. Comme visible sur cette figure, la courbe de montée en température de la maison 1 présente une partie sensiblement linéaire sur l'intervalle de temps $\Delta t_2$. La mise en équation de cette partie linéaire de la courbe donne : $T_{i2}$ = 16,2 °C+0,014 (t -1730), avec t en minutes.

L'évolution de la température de l'air extérieur $T_{e2}$ pendant la même période de temps $D_2$ est également montrée sur la figure 6. Comme dans la première étape, la température de l'air extérieur $T_{e2}$ sur l'intervalle de temps $\Delta t_2$ est suffisamment stable pour qu'on puisse la considérer sensiblement constante et égale à la température moyenne sur l'intervalle de temps $\Delta t_2$, à savoir dans cet exemple $T_{e2m}$ = 14°C.

Le rapport $\dfrac{\alpha_1}{\alpha_2}$ entre, d'une part, la pente $\alpha_1$ de la droite représentative de l'évolution de la grandeur $T_{i1}(t)$ et, d'autre part, la pente $\alpha_2$ de la droite représentative de l'évolution de la grandeur $T_{i2}(t)$ vaut donc $\dfrac{\alpha_1}{\alpha_2} = -\dfrac{0,003}{0,014}$ .

Comme le rapport des pentes $\dfrac{\alpha_1}{\alpha_2}$ est égal à $\dfrac{P_{tot1} - \theta_{1m}.K}{P_{tot2} - \theta_{2m}.K}$ d'après l'équation (2) précédente, en prenant $\theta_{1m}$ = 10,9°C, $\theta_{2m}$ = 3,9°C, $P_{imp1}$ = 0 W, $P_{imp2}$ = 4,23 × 5000 W, on obtient la valeur du coefficient de déperdition thermique K de la maison 1 :

$$K_{calc} = 386 \text{ W/K.}$$

En pratique, les étapes d'acquisition des températures intérieure $T_{ik}$ et extérieure $T_{ek}$ et de calcul du coefficient de déperdition thermique $K$ à partir des températures acquises peuvent être réalisées au moyen d'un microprocesseur ou de toute autre unité de calcul électronique appropriée.

Le chauffage ayant été apporté par la masse du bâtiment, la relation (4) est applicable et, avec $h_i$ = 8 W/m².K et $A_T$ = 736 m², on obtient :

$$K_{corr} = 362 \text{ W/K}.$$

La valeur du coefficient de déperdition thermique $K_{corr}$ de la maison 1 déterminée par le procédé de l'invention peut être comparée à une valeur statique moyenne $K_s$ du coefficient de déperdition thermique. Cette valeur statique moyenne $K_s$ est estimée à partir de la consommation énergétique de la pompe à chaleur 2, laquelle est mesurée une fois par semaine pendant treize semaines hivernales, en configuration occupée de la maison et pour une température statique imposée à l'intérieur de la maison $T_{is}$ de 20°C. En retranchant la part de consommation due à l'eau chaude sanitaire, la valeur statique moyenne $K_s$ du coefficient de déperdition thermique est estimée à environ 430 W/K. Cette valeur statique moyenne $K_s$ est bien du même ordre de grandeur que la valeur du coefficient de déperdition thermique $K_{corr}$ déterminée par le procédé de l'invention.

La différence entre les deux valeurs $K_s$ et $K_{corr}$ peut provenir des conditions d'occupation différentes de la maison 1 pour, d'une part, la mise en oeuvre du procédé conforme à l'invention et, d'autre part, l'évaluation de la valeur statique moyenne $K_s$. En effet, le procédé de l'invention a été mis en oeuvre dans la maison inoccupée, tandis que la valeur statique moyenne $K_s$ a été évaluée avec la maison occupée par quatre personnes, ce qui implique des contributions énergétiques supplémentaires, notamment en termes de débit de renouvellement d'air dû aux VMC hygroréglables, et en termes de puissance due au rayonnement solaire ou au fonctionnement d'appareils électroménagers.

Un test de porte soufflante a également été réalisé sur la maison 1. Ce test conduit à une valeur de l'indicateur n50 de 7,35 pour un volume chauffé de la maison 1 de 688 m$^3$. A l'aide de la relation (3), on peut alors déduire la valeur moyenne du débit de renouvellement de l'air m' dans la maison 1 :

$$m' = 250 \text{ m}^3/\text{h}$$

Il en résulte que la contribution des infiltrations d'air représente :

$$m'.Cp = 85 \text{ W/K}.$$

En supposant que les deux VMC hygroréglables de la maison 10 ne se sont pas déclenchées au cours des périodes de temps $D_1$ et $D_2$, on peut déduire que la contribution des pertes thermiques par transmission est :

$$H_T = UA_T = K_{corr} - m'.Cp = 277 \text{ W/K}.$$

En outre, le procédé de l'invention permet d'accéder à la valeur de l'inertie ou capacité thermique effective C de la maison 1 telle que définie précédemment, à savoir l'énergie nécessaire pour augmenter la température ambiante de la maison de 1 K à température extérieure constante :

$$C = 80 \text{ MJ/K}.$$

EXEMPLE 2

En référence aux figures 7 et 8, le procédé selon l'invention est mis en oeuvre pour la détermination du coefficient de déperdition thermique K d'un bungalow 10 qui a un volume intérieur $V_i$ de 5,8 m x 2,1 m x 2,6 m et qui est muni de deux fenêtres triple vitrage. L'enveloppe du bungalow 10 est constituée de panneaux sandwich isolants assemblés par une structure métallique. Une isolation supplémentaire a été ajoutée à l'enveloppe, sous la forme d'une laine de verre de 40 mm d'épaisseur et d'une plaque de plâtre en parement intérieur de l'enveloppe. La perméabilité à l'air, mesurée par gaz traceur, est de 0,43 vol/h. Le procédé est mis en oeuvre alors que le bungalow est inoccupé.

Le chauffage du bungalow 10 est assuré par des convecteurs électriques 20 ayant une puissance réelle mesurée de 1880 W. Les convecteurs permettent de chauffer l'air du bungalow et, du fait du volume réduit du bungalow, le chauffage du bungalow est homogène. Les convecteurs 20 constituent une source de puissance contrôlée bien adaptée pour générer les impulsions de chauffage du bungalow, c'est-à-dire les puissances de chauffe imposées $P_{imp k}$, qui sont requises par le procédé de l'invention. Lors des chauffages, la consigne est de 32°C, mesurée par un globe noir placé au centre du volume d'air.

Le procédé selon l'invention est mis en oeuvre en continu dans sa globalité sur une seule période de temps nocturne, afin de s'affranchir de la contribution du rayonnement solaire au chauffage du bungalow 10. A partir d'une température intérieure du bungalow $T_{i1d}$ = 32°C, on procède à un refroidissement du bungalow sur une première période de temps $D_1$ de 23h à 3h, ce qui correspond à une puissance de chauffe imposée $P_{imp1}$ nulle, puis à un chauffage du bungalow sur une deuxième période de temps $D_2$ de 3h à 8h avec une puissance de chauffe imposée $P_{imp2}$ de 1880 W. La deuxième période de temps $D_2$ est ainsi immédiatement consécutive à la première période de temps $D_1$.

Aucune source de puissance autre que celle utilisée pour l'application des impulsions de chauffage n'est active dans le bungalow 10 au cours du procédé. Ainsi, pour chaque période de temps $D_1$ et $D_2$, la seule puissance à considérer dans le bilan énergétique est la puissance de chauffe imposée $P_{imp1}$ ou $P_{imp2}$.

Dans une première étape du procédé, qui correspond à la première période de temps $D_1$, on applique la première puissance de chauffe imposée $P_{imp1}$ nulle dans le bungalow 10, à partir de la température de départ $T_{i1d}$ = 32°C, c'est-à-dire que les convecteurs 2 ne fonctionnent pas pendant cette période $D_1$. La température ambiante à l'intérieur du bungalow $T_{i1}$ est alors mesurée toutes les dix secondes. A cet effet, un globe noir est placé au centre du bungalow.

La courbe représentative de l'évolution de la température intérieure du bungalow $T_{i1}$ en fonction du temps pendant la période de temps $D_1$ est montrée sur la figure 8. Comme visible sur cette figure, la courbe de descente en température du bungalow 10 présente une partie sensiblement linéaire sur l'intervalle de temps $\Delta t_1$. La mise en équation de cette partie linéaire de la courbe donne : $T_{i1}$ = 26,5 °C - 0,00053 t, avec t en secondes.

La figure 8 fait également apparaître l'évolution de la température de l'air extérieur $T_{e1}$ pendant la période de temps $D_1$. La température de l'air extérieur $T_{e1}$ sur l'intervalle de temps $\Delta t_1$ est suffisamment stable pour qu'on puisse la considérer sensiblement constante et égale à la température moyenne sur l'intervalle de temps $\Delta t_1$, à savoir dans cet exemple $T_{e1m}$ = 13,4°C.

Dans une deuxième étape du procédé, qui correspond à la deuxième période de temps $D_2$, on rétablit le chauffage dans le bungalow 10 en appliquant la deuxième puissance de chauffe imposée $P_{imp2}$ dans le bungalow, égale à 1880 W, à partir d'une température de départ $T_{i2d}$ = 22°C. Comme dans la première étape, la température ambiante à l'intérieur de la maison $T_{i2}$ est alors mesurée toutes les dix secondes, au moyen d'un globe noir placé au centre du bungalow.

La figure 8 montre la courbe représentative de l'évolution de la température intérieure du bungalow $T_{i2}$ en fonction du temps pendant la période de temps $D_2$. Comme visible sur cette figure, la courbe de montée en température du bungalow 10 présente une partie sensiblement linéaire sur l'intervalle de temps $\Delta t_2$. La mise en équation de cette partie linéaire de la courbe donne : $T_{i2}$ = 28,9 °C + 0,00179 t, avec t en secondes.

L'évolution de la température de l'air extérieur $T_{e2}$ pendant la même période de temps $D_2$ est également montrée sur la figure 8. Comme dans la première étape, la température de l'air extérieur $T_{e2}$ sur l'intervalle de temps $\Delta t_2$ est suffisamment stable pour qu'on puisse la considérer sensiblement constante et égale à la température moyenne sur l'intervalle de temps $\Delta t_2$, à savoir dans cet exemple $T_{e2m}$ = 11,8°C.

Le rapport $\dfrac{\alpha_1}{\alpha_2}$ entre, d'une part, la pente $\alpha_1$ de la droite représentative de l'évolution de la grandeur $T_{i1}(t)$ et, d'autre part, la pente $\alpha_2$ de la droite représentative de l'évolution de la grandeur $T_{i2}(t)$ vaut donc $\dfrac{\alpha_1}{\alpha_2} = -\dfrac{0,00053}{0,00179}$.

Comme le rapport des pentes $\dfrac{\alpha_1}{\alpha_2}$ est égal à $\dfrac{P_{tot1} - \theta_{1m}.K}{P_{tot2} - \theta_{2m}.K}$ d'après l'équation (2) précédente, en prenant $\theta_{1m}$ = 11,7°C, $\theta_{2m}$ = 18,1°C, $P_{imp1}$ = 0 W, $P_{imp2}$ = 1880 W, on obtient la valeur du coefficient de déperdition thermique $K_{calc}$ du bungalow 10 :

$$K_{calc} = 32,6 \ \text{W/K.}$$

En pratique, les étapes d'acquisition des températures intérieure $T_{ik}$ et extérieure $T_{ek}$ et de calcul du coefficient de déperdition thermique $K$ à partir des températures acquises peuvent être réalisées au moyen d'un microprocesseur ou de toute autre unité de calcul électronique appropriée.

Dans cet exemple, on chauffe l'air intérieur du bungalow 10 et on utilise, pour calculer le coefficient de déperdition thermique, des températures intérieures de globe noir qui sont proches des températures de l'air ambiant à l'intérieur du bungalow. Dès lors, il n'est pas nécessaire de corriger la valeur calculée du coefficient de déperdition thermique $K_{calc}$ avec la relation (4).

La valeur du coefficient de déperdition thermique $K_{calc}$ du bungalow 10 déterminée par le procédé de l'invention peut être comparée à une valeur statique moyenne $K_s$ du coefficient de déperdition thermique. Cette valeur statique moyenne $K_s$ est estimée en régime permanent. En pratique, on considère que le régime permanent est atteint lorsque la température des murs du bungalow est stable, la température de l'air l'étant alors aussi. L'estimation de $K_s$ a été faite lors d'un essai long durant lequel on a mesuré, pendant une période de 8 heures de 23h à 7h, la puissance moyenne $P_m$ nécessaire pour maintenir la température ambiante à l'intérieur du bungalow $T_i$ stable, la température de l'air extérieur $T_e$ étant de préférence également stable pendant cette période. La valeur statique moyenne $K_s$ du coefficient de déperdition thermique est ensuite estimée à partir de la relation :

$$P_m = K_s A_T (T_i - T_e)$$

La valeur statique moyenne $K_s$ du coefficient de déperdition thermique ainsi estimée est de l'ordre de 32,7 W/K, ce qui est proche de la valeur du coefficient de déperdition thermique $K_{calc}$ déterminée par le procédé de l'invention. Cela valide le modèle utilisé.

La valeur moyenne du débit de renouvellement de l'air m' dans le bungalow est :

$$m' = 0,43 \; V_i = 13,62 \; m^3/h$$

Il en résulte que la contribution des infiltrations d'air représente :

$$m'.Cp = 4,6 \; W/K.$$

On peut déduire que la contribution des pertes thermiques par transmission est :

$$H_T = UA_T = K_{calc} - m'.Cp = 28,0 \; W/K.$$

En outre, le procédé de l'invention permet d'accéder à la valeur de l'inertie ou capacité thermique effective C du bungalow 10 telle que définie précédemment, à savoir l'énergie nécessaire pour augmenter la température ambiante du bungalow de 1 K à température extérieure constante :

$$C = 720 \; kJ/K.$$

A titre d'exemple comparatif, le procédé selon l'invention a été mis en oeuvre à nouveau sur le bungalow 10, mais cette fois le bungalow 10 est muni de deux plaques de plâtre en parement intérieur de l'enveloppe du bungalow, au lieu d'une seule plaque de plâtre comme précédemment. Tous les autres paramètres sont identiques, en particulier la perméabilité à l'air mesurée par gaz traceur est toujours de 0,43 vol/h et le procédé est mis en oeuvre en continu dans sa globalité sur une seule période de temps nocturne pendant laquelle le bungalow est inoccupé. Les cycles de chauffage-refroidissement sont les mêmes que précédemment.

On obtient alors la valeur du coefficient de déperdition thermique $K_{calc}$ du bungalow 10 :

$$K_{calc} = 30,1 \; W/K.$$

La contribution des infiltrations d'air étant toujours m'.Cp = 4,6 W/K, on peut déduire que la contribution des pertes thermiques par transmission est :

$$H_T = UA_T = K_{calc} - m'.Cp = 25,5 \; W/K.$$

La valeur de l'inertie ou capacité thermique effective C du bungalow muni de deux plaques de plâtre en parement intérieur, à savoir l'énergie nécessaire pour augmenter la température ambiante du bungalow de 1 K à température extérieure constante, est alors :

$$C = 1071 \text{ kJ/K,}$$

ce qui correspond à une augmentation de l'ordre de 350 kJ/K de la capacité thermique effective du bungalow par rapport au même bungalow muni d'une seule plaque de plâtre en parement intérieur. Une estimation de la surface de plâtre ajoutée pour passer d'une plaque à deux plaques de plâtre en parement intérieur du bungalow indique un ajout d'inertie de 400 kJ/K. Ainsi, il ressort que le procédé selon l'invention est capable de discriminer $K$ et C.

EXEMPLE 3

Afin de vérifier la validité des hypothèses sur lesquelles repose le procédé de l'invention, des essais virtuels ont été réalisés avec le logiciel TRNSYS sur une maison fictive ayant une partie habitée de 12,10 m x 9,90 m x 2,50 m et une surface déperditive totale S = 350 m$^2$. Plus précisément, deux séries de calculs ont été effectuées :

- une première série correspondant à un régime permanent obtenu avec un fichier météo non réaliste, sans soleil et en fixant la température extérieure à 10°C et la puissance à 30 kW pendant le temps nécessaire jusqu'à stabilisation des températures (400 heures au maximum) ;
- une deuxième série correspondant à un régime transitoire obtenu avec un fichier météo réaliste, à savoir 3 jours en mars pour un climat adapté à la ville de Chambéry, en apportant une puissance répartie de manière homogène, soit par le sol à la surface (pas en profondeur), soit par l'air, de 30 kW de 19h à minuit, et de 3 kW pendant les 36 heures suivantes, après régulation à 19°C pendant une journée.

Les deux séries d'essais ont été réalisées sans occupation ni apport de chaleur interne. A chaque fois, les infiltrations n'ont d'abord pas été prises en compte, puis elles l'ont été.

Le cas permanent permet d'obtenir le coefficient de déperdition thermique K théorique de la maison. En considérant un chauffage par l'air et aucune infiltration, on obtient $K_{calc}$ = 167 W/K. Dans les mêmes conditions avec le cas transitoire, en appliquant le procédé conforme à l'invention, on obtient $K_{calc}$ = 164 W/K, soit moins de 2 % d'écart avec la valeur obtenue dans le cas permanent. Cela valide que le procédé selon l'invention fournit une bonne estimation du coefficient de déperdition thermique K.

En réitérant les deux séries de calculs dans les mêmes conditions, mais avec un apport de chaleur par le plancher au lieu de l'air, on obtient respectivement $K_{calc}$ = 177 W/K dans le cas permanent, et $K_{calc}$ = 181 W/K dans le cas transitoire en appliquant le procédé conforme à l'invention. En considérant que le coefficient d'échange convectif h entre les parois et l'air ambiant est de 8 W/m$^2$.K et en utilisant la relation (4), on obtient $K_{corr}$ = 166 W/K dans le cas permanent et $K_{corr}$ = 170 W/K dans le cas transitoire. Cela valide le fait que le chauffage direct de la masse du local peut être utilisé en l'absence d'infiltrations.

Enfin, en considérant un cas plus réaliste, avec un apport de chaleur par le plancher et des infiltrations de 0,4 vol/h, on obtient $K_{calc}$ = 220 W/K dans le cas transitoire en appliquant le procédé conforme à l'invention. En faisant l'hypothèse que l'on peut appliquer la correction de la relation (4) décrite précédemment même en présence d'infiltrations, pour tenir compte de l'échange de chaleur entre les parois et l'air ambiant avec le coefficient d'échange convectif $h$ pris à 8 W/m$^2$.K, on obtient $K_{corr}$ = 204 W/K au niveau de l'air. En tenant compte de la valeur des infiltrations de 0,4 vol/h = 120 m$^3$/h, la perte par infiltrations est de 120 m$^3$/h / 3600 s x 1,2 kg/m$^3$ x 1 kJ/kg/K = 0,04 kJ/s.K = 40 W/K. Le coefficient de déperdition thermique de l'enveloppe seule est alors de 204 W/K - 40 W/K = 164 W/K, valeur très proche de celle estimée dans le régime permanent. Cela valide le fait que le chauffage direct de la masse du local peut être utilisé même en présence d'infiltrations, et qu'il est possible en mesurant ces infiltrations de séparer les pertes thermiques par transmission et les pertes par infiltrations.

L'invention n'est pas limitée aux exemples décrits ci-dessus. En particulier, comme déjà évoqué, le procédé selon l'invention peut être mis en oeuvre indifféremment avec des moyens de chauffage qui équipent le local de manière fixe ou avec des moyens de chauffage qui sont rapportés dans le local spécifiquement pour la mise en oeuvre du procédé, pour autant que la puissance fournie par ces moyens de chauffage pour les impulsions requises par le procédé puisse être déterminée de manière précise. Ainsi, dans l'exemple de la maison 1, le procédé selon l'invention aurait pu être mis en oeuvre en désactivant le système de chauffage utilisant la pompe à chaleur 2 de la maison et en appliquant les impulsions de chauffage au moyen d'un dispositif de chauffage rapporté dans la maison, tel qu'un dispositif comprenant des films chauffants électriques ou encore un dispositif combinant des appareils de chauffage électriques de type convectif et des ventilateurs.

Comme illustré précédemment, lorsque la valeur de la capacité thermique effective du local $C$ n'est pas connue, le procédé de l'invention fait intervenir au moins deux puissances imposées différentes $P_{\text{imp}k}$ de chauffage du local. De préférence, la différence entre les deux puissances imposées $P_{\text{imp}k}$ est maximisée. Ainsi, dans les exemples précédents, une puissance maximale et une puissance nulle ont été sélectionnées. En variante, il aurait été possible de choisir deux puissances imposées $P_{\text{imp}k}$ non nulles, notamment une puissance de chauffage relativement faible et une puissance de chauffage maximale.

Par ailleurs, dans le cas d'un local de grande taille, tel qu'un immeuble à plusieurs étages, le procédé de l'invention peut être utilisé soit pour la détermination du coefficient de déperdition thermique $K$ du local dans son intégralité, auquel cas le chauffage et le brassage de l'air doivent être assurés dans tout le local, soit pour la détermination du coefficient de déperdition thermique $K$ d'une partie seulement du local. Ainsi, dans le cas d'un immeuble, on peut ne tester qu'un seul appartement de l'immeuble. Pour cela, il est nécessaire :

- soit de prendre en compte les pertes thermiques par le calcul, à la condition toutefois que les parties mitoyennes à l'appartement mesuré soient dans un état thermique représentatif de leur état d'occupation normal, en particulier que les parties mitoyennes normalement habitées soient à une température ambiante de l'ordre de 20°C ;
- soit de minimiser autant que possible les pertes thermiques, par exemple en sur-isolant les parois mitoyennes au moyen d'une isolation rapportée, ou encore en conditionnant les parties mitoyennes de la même manière que l'appartement mesuré de façon à assurer un écart de température de part et d'autre de la paroi mitoyenne aussi proche de zéro que possible.

Enfin, comme il ressort des exemples précédents, le procédé selon l'invention est bien adapté pour la détermination du coefficient de déperdition thermique $K$ de locaux présentant une bonne isolation thermique. Dans ce cas, il en en effet aisé de dissiper une puissance thermique telle que la courbe $T_{ik}(t)$ peut être considérée comme une droite. Pour d'autres configurations de locaux, notamment des locaux anciens et moins bien isolés thermiquement, le temps de réponse aux impulsions de chauffage $P_{\text{imp}k}$ peut être trop court pour que l'évolution de la grandeur $T_{ik}(t)$ puisse être considérée linéaire. L'évolution non linéaire de $T_{ik}(t)$ peut alors être modélisée par une exponentielle du type

$$(\theta_k(0) - \frac{P_{\text{imp}k}}{K})\exp(-t/\tau)$$ sur au moins un intervalle de temps $\Delta t_k'$, où $\tau = \frac{K}{C}$ est la constante de temps thermique du local. Il est possible de déterminer le coefficient $K$ en appliquant une seule impulsion de chauffage du local, avec une puissance $P_{\text{imp}k}$ impérativement non nulle, la méthode consistant ensuite à déterminer la valeur $K^*$ du coefficient

$K$ telle que la courbe $$Ln\left[\frac{\theta_k(t) - \dfrac{P_{\text{imp}k}}{K^*}}{\theta_k(0) - \dfrac{P_{\text{imp}k}}{K^*}}\right]$$ est une droite, où $\theta_k(t) = T_{ik}(t) - T_{ekm}'$ et $T_{ekm}'$ est la moyenne des mesures de température de l'air extérieur $T_{ek}$ sur l'intervalle de temps $\Delta t_k'$.

## Revendications

1. Procédé de détermination du coefficient de déperdition thermique $K$ d'un local, **caractérisé en ce qu'**il comprend des étapes dans lesquelles :

    - on procède, dans le local inoccupé, à une campagne de mesures d'au moins une température à l'intérieur du local $T_{ik}$ à intervalles de temps rapprochés, sur au moins deux périodes de temps $D_k$ successives correspondant à des puissances $P_{\text{tot}k}$ distinctes de chauffage du local ;
    - on détermine la température de l'air extérieur $T_{ek}$ auxdits mêmes temps rapprochés ;
    - pour chaque période de temps $D_k$, à partir de l'évolution $T_{ik}(t)$ de la grandeur $T_{ik}$ en fonction du temps :

        ◦ soit, s'il existe un intervalle de temps $\Delta t_k$ pour lequel l'évolution $T_{ik}(t)$ est sensiblement linéaire, on détermine sur cet intervalle de temps $\Delta t_k$ la pente $\alpha_k$ de la tangente à la courbe $T_{ik}(t)$ et on déduit la valeur du coefficient de déperdition thermique $K$ du local à partir des pentes $\alpha_k$ ;

        ◦ soit, s'il n'existe pas d'intervalle de temps pour lequel l'évolution $T_{ik}(t)$ est sensiblement linéaire, on sélectionne un intervalle de temps $\Delta t_k'$ sur lequel l'évolution $T_{ik}(t)$ est sensiblement exponentielle de type $\exp(-t/\tau)$, avec $\tau$ la constante de temps thermique du local, et on déduit la valeur du coefficient de déperdition thermique *K* du local, qui est la valeur telle que la courbe $Ln\left[(\theta_k(t) - \frac{P_{\text{tot}k}}{K})/(\theta_k(0) - \frac{P_{\text{tot}k}}{K})\right]$ est une droite, avec $\theta_k(t) = T_{ik}(t) - T_{ekm}$' où $T_{ekm}$' est la moyenne des mesures de température de l'air extérieur $T_{ek}$ sur l'intervalle de temps $\Delta t_k$'.

2. Procédé selon la revendication 1, **caractérisé en ce que**, pour chaque période de temps $D_k$, la puissance $P_{\text{tot}k}$ de chauffage du local comprend une puissance de chauffe $P_{\text{imp}k}$ imposée au moyen d'une source de puissance contrôlée.

3. Procédé selon l'une quelconque des revendications précédentes, **caractérisé en ce qu'**il comprend des étapes dans lesquelles :

   - on procède, dans le local inoccupé et sur deux périodes de temps $D_1$ et $D_2$ successives :

      i. sur la première période de temps $D_1$, à l'application d'une première puissance de chauffe imposée $P_{\text{imp}1}$ du local au moyen d'une source de puissance contrôlée, et à une campagne de mesures d'au moins une température à l'intérieur du local $T_{i1}$ à intervalles de temps rapprochés, ainsi qu'à la détermination de la température de l'air extérieur $T_{e1}$ auxdits mêmes temps rapprochés, puis
      ii. sur la deuxième période de temps $D_2$, à l'application d'une deuxième puissance de chauffe imposée $P_{\text{imp}2}$ du local au moyen d'une source de puissance contrôlée, où la deuxième puissance de chauffe imposée $P_{\text{imp}2}$ est différente de la première puissance $P_{\text{imp}1}$, et à une campagne de mesures d'au moins une température à l'intérieur du local $T_{i2}$ à intervalles de temps rapprochés, ainsi qu'à la détermination de la température de l'air extérieur $T_{e2}$ auxdits mêmes temps rapprochés ;

   - pour chacune des première et deuxième périodes de temps $D_1$ et $D_2$, on sélectionne un intervalle de temps $\Delta t_1$ ou $\Delta t_2$ pour lequel l'évolution $T_{i1}(t)$ ou $T_{i2}(t)$ est sensiblement linéaire et on détermine, sur cet intervalle de temps $\Delta t_1$ ou $\Delta t_2$, la pente $\alpha_1$ ou $\alpha_2$ de la tangente à la courbe $(T_{ik}(t))_{k=1 \text{ ou } 2}$ ;

   - on déduit la valeur du coefficient de déperdition thermique K du local à partir du rapport des pentes $\frac{\alpha_1}{\alpha_2}$.

4. Procédé selon la revendication 3, **caractérisé en ce qu'**une puissance parmi la première puissance de chauffe imposée $P_{\text{imp}1}$ et la deuxième puissance de chauffe imposée $P_{\text{imp}2}$ est nulle, alors que l'autre puissance est non nulle.

5. Procédé selon l'une quelconque des revendications 2 à 4, **caractérisé en ce que** la source de puissance contrôlée est un équipement fixe du local.

6. Procédé selon l'une quelconque des revendications 2 à 4, **caractérisé en ce que** la source de puissance contrôlée est une source rapportée dans le local spécifiquement pour la mise en oeuvre du procédé.

7. Procédé selon l'une quelconque des revendications précédentes, **caractérisé en ce que**, sur chaque période de temps $D_k$, la température de l'air extérieur $T_{ek}$ est stable.

8. Procédé selon l'une quelconque des revendications précédentes, **caractérisé en ce que**, sur chaque période de temps $D_k$, le rayonnement solaire est faible, de préférence nul.

9. Procédé selon la revendication 8, **caractérisé en ce qu'**il est réalisé dans sa globalité sur une seule période nocturne.

10. Procédé selon l'une quelconque des revendications précédentes, **caractérisé en ce que**, sur chaque période de temps $D_k$, tout système de ventilation fixe équipant le local est désactivé.

11. Procédé selon l'une quelconque des revendications précédentes, **caractérisé en ce que** la détermination de la température de l'air extérieur $T_{ek}$ auxdits mêmes temps rapprochés est obtenue par une campagne de mesures.

12. Procédé selon l'une quelconque des revendications précédentes, **caractérisé en ce que** chaque campagne de mesures de la température à l'intérieur du local comprend des mesures de la température ambiante, des mesures de la température de parois et/ou des mesures de la température moyenne radiante.

13. Dispositif pour la mise en oeuvre d'un procédé selon l'une quelconque des revendications précédentes, **caractérisé en ce qu'**il comprend au moins un capteur de température qui mesure une température à l'intérieur du local $T_{ik}$ et un dispositif de chauffage homogène du local comportant une source de puissance contrôlée, ainsi qu'une unité de calcul électronique comportant des moyens pour acquérir les mesures de température à l'intérieur du local $T_{ik}$ et des moyens de mise en oeuvre des étapes de calcul du procédé que sont la détermination des pentes $\alpha_k$, ou la linéarisation de l'évolution $Ln\left[(\theta_k(t) - \frac{P_{\text{tot}k}}{K})/(\theta_k(0) - \frac{P_{\text{tot}k}}{K})\right]$, et le calcul du coefficient de déperdition thermique K du local, à partir des mesures de température acquises.

14. Dispositif selon la revendication 13, **caractérisé en ce que** le dispositif de chauffage chauffe directement la capacité thermique du local et le capteur de température mesure la température dans l'air à l'intérieur du local.

15. Dispositif selon l'une quelconque des revendications 13 et 14, **caractérisé en ce que** l'unité de calcul électronique comporte des moyens de contrôle automatique de la source de puissance en fonction des mesures de température acquises.

16. Procédé de détermination du coefficient de déperdition thermique $K$ d'un local dont la capacité thermique effective $C$ est connue, où $C$ est l'énergie nécessaire pour augmenter la température ambiante à l'intérieur du local de 1 K alors que la température de l'air extérieur est constante, **caractérisé en ce qu'**il comprend des étapes dans lesquelles :

- on procède, dans le local inoccupé, à une campagne de mesures d'au moins une température à l'intérieur du local $T_i$ à intervalles de temps rapprochés, sur une seule période de temps correspondant à une puissance $P_{\text{tot}}$ non nulle de chauffage du local ;
- on détermine la température de l'air extérieur $T_e$ auxdits mêmes temps rapprochés ;
- à partir de l'évolution $T_i(t)$ de la grandeur $T_i$ en fonction du temps :

  ∘ soit, s'il existe un intervalle de temps $\Delta t$ pour lequel l'évolution $T_i(t)$ est sensiblement linéaire, on détermine sur cet intervalle de temps $\Delta t$ la pente $\alpha$ de la tangente à la courbe $T_i(t)$ et on déduit la valeur du coefficient de déperdition thermique $K$ du local à partir de la pente $\alpha$ et de la capacité thermique effective $C$ du local ;
  ∘ soit, s'il n'existe pas d'intervalle de temps pour lequel l'évolution $T_i(t)$ est sensiblement linéaire, on sélectionne un intervalle de temps $\Delta t'$ sur lequel l'évolution $T_i(t)$ est sensiblement exponentielle de type exp(-$Kt$/$C$) et on déduit la valeur du coefficient de déperdition thermique $K$ du local, qui est la valeur telle que la courbe

$$Ln\left[(\theta(t) - \frac{P_{\text{tot}}}{K})/(\theta(0) - \frac{P_{\text{tot}}}{K})\right]$$ est une droite, avec $\theta(t) = T_i(t) - T_{em}'$ où $T_{em}'$ est la moyenne des mesures de température de l'air extérieur $T_e$ sur l'intervalle de temps $\Delta t'$.

## Patentansprüche

1. Verfahren zur Bestimmung des Wärmeverlustkoeffizienten $K$ eines Gebäudes, **dadurch gekennzeichnet, dass** es die folgenden Schritte umfasst:

- Vornehmen, in dem leeren Gebäude, einer Reihe von Messungen mindestens einer Temperatur $T_{ik}$ im Inneren des Gebäudes in eng beieinander liegenden Zeitintervallen über mindestens zwei aufeinanderfolgende Zeiträume $D_k$, welche verschiedenen Heizleistungen $P_{\text{tot}k}$ des Gebäudes entsprechen;
- Bestimmen der Außenlufttemperatur $T_{ek}$ zu denselben eng beieinander liegenden Zeiten;
- für jeden Zeitraum $D_k$, ausgehend vom Verlauf $T_{ik}(t)$ der Größe $T_{ik}$ bezogen auf die Zeit:

  • bei Vorliegen eines Zeitintervalls $\Delta t_k$, für das der Verlauf $T_{ik}(t)$ im Wesentlichen linear ist, Bestimmen, über dieses Zeitintervall $\Delta t_k$, der Steigung $\alpha_k$ der Tangente an der Kurve $T_{ik}(t)$ und Ableiten des Wertes des Wärmeverlustkoeffizienten $K$ des Gebäudes aus den Steigungen $\alpha_k$;

• bei Nichtvorliegen eines Zeitintervalls, für das der Verlauf $T_{ik}(t)$ im Wesentlichen linear ist, Auswählen eines Zeitintervalls $\Delta t_k{'}$, über dem der Verlauf $T_{ik}(t)$ im Wesentlichen exponentiell vom Typ $\exp(-t/\tau)$ ist, wobei $\tau$ die thermische Zeitkonstante des Gebäudes ist, und Ableiten des Wertes des Wärmeverlustkoeffizienten $K$ des Gebäudes, welcher ein Wert derart ist, dass die Kurve $Ln\left[\left(\theta_k(t) - \dfrac{P_{\text{tot}k}}{K}\right)/\left(\theta_k(0) - \dfrac{P_{\text{tot}k}}{K}\right)\right]$ eine Gerade mit $\theta_k(t) = T_{ik}(t) - T_{ekm}{'}$ ist, wobei $T_{ekm}{'}$ der Mittelwert der Messungen der Außenlufttemperatur $T_{ek}$ über dem Zeitintervall $\Delta t_k{'}$ ist.

2. Verfahren nach Anspruch 1, **dadurch gekennzeichnet, dass** für jeden Zeitraum $D_k$ die Heizleistung $P_{\text{tot}k}$ des Gebäudes eine Heizleistung $P_{\text{imp}k}$ umfasst, die mittels einer gesteuerten Leistungsquelle aufgebracht wird.

3. Verfahren nach einem der vorhergehenden Ansprüche, **dadurch gekennzeichnet, dass** es die folgenden Schritte umfasst:

- Vornehmen, in dem leeren Gebäude und über zwei aufeinanderfolgende Zeiträume $D_1$ und $D_2$:

i. über den ersten Zeitraum $D_1$, einer Beaufschlagung des Gebäudes mit einer ersten aufgebrachten Heizleistung $P_{\text{imp}1}$ mittels einer gesteuerten Leistungsquelle und Vornehmen einer Reihe von Messungen mindestens einer Temperatur $T_{i1}$ im Inneren des Gebäudes in eng beieinander liegenden Zeitintervallen sowie einer Bestimmung der Außenlufttemperatur $T_{e1}$ zu denselben eng beieinander liegenden Zeiten, dann
ii. über den zweiten Zeitraum $D_2$, einer Beaufschlagung des Gebäudes mit einer zweiten aufgebrachten Heizleistung $P_{\text{imp}2}$ mittels einer gesteuerten Leistungsquelle, wobei die zweite aufgebrachte Heizleistung $P_{\text{imp}2}$ von der ersten Leistung $P_{\text{imp}1}$ verschieden ist, und Vornehmen einer Reihe von Messungen mindestens einer Temperatur $T_{i2}$ im Inneren des Gebäudes in eng beieinander liegenden Zeitintervallen sowie einer Bestimmung der Außenlufttemperatur $T_{e2}$ zu denselben eng beieinander liegenden Zeiten;

- für jeweils den ersten und zweiten Zeitraum $D_1$ und $D_2$, Auswählen eines Zeitintervalls $\Delta t_1$ oder $\Delta t_2$, für das der Verlauf $T_{i1}(t)$ oder $T_{i2}(t)$ im Wesentlichen linear ist, und Bestimmen, über dieses Zeitintervall $\Delta t_1$ oder $\Delta t_2$, der Steigung $\alpha_1$ oder $\alpha_2$ der Tangente an der Kurve $(T_{ik}(t))_{k=1\ oder\ 2}$ ;

- Ableiten des Wertes des *Wärmeverlustkoeffizienten $K$* des Gebäudes aus dem Verhältnis der Steigungen $\dfrac{\alpha_1}{\alpha_2}$.

4. Verfahren nach Anspruch 3, **dadurch gekennzeichnet, dass** eine Leistung aus der ersten aufgebrachten Heizleistung $P_{\text{imp}1}$ und der zweiten aufgebrachten Heizleistung $P_{\text{imp}2}$ null ist, während die andere Leistung von null verschieden ist.

5. Verfahren nach einem der Ansprüche 2 bis 4, **dadurch gekennzeichnet, dass** die gesteuerte Leistungsquelle eine ortsfeste Einrichtung des Gebäudes ist.

6. Verfahren nach einem der Ansprüche 2 bis 4, **dadurch gekennzeichnet, dass** die gesteuerte Leistungsquelle eine eigens für die Durchführung des Verfahrens in das Gebäude verbrachte Quelle ist.

7. Verfahren nach einem der vorhergehenden Ansprüche, **dadurch gekennzeichnet, dass** über jeden Zeitraum $D_k$ die Außenlufttemperatur $T_{ek}$ gleichbleibend ist.

8. Verfahren nach einem der vorhergehenden Ansprüche, **dadurch gekennzeichnet, dass** über jeden Zeitraum $D_k$ die Sonneneinstrahlung schwach, vorzugsweise gleich null ist.

9. Verfahren nach Anspruch 8, **dadurch gekennzeichnet, dass** es in seiner Gesamtheit über einen einzigen Nachtzeitraum durchgeführt wird.

10. Verfahren nach einem der vorhergehenden Ansprüche, **dadurch gekennzeichnet, dass** über jeden Zeitraum $D_k$ jedes ortsfeste Belüftungssystem, mit dem das Gebäude ausgestattet ist, deaktiviert ist.

11. Verfahren nach einem der vorhergehenden Ansprüche, **dadurch gekennzeichnet, dass** die Bestimmung der Au-

ßenlufttemperatur $T_{ek}$ zu denselben eng beieinander liegenden Zeiten durch eine Reihe von Messungen erhalten wird.

12. Verfahren nach einem der vorhergehenden Ansprüche, **dadurch gekennzeichnet, dass** jede Reihe von Messungen der Temperatur im Inneren des Gebäudes Messungen der Umgebungstemperatur, Messungen der Temperatur von Wänden und/oder Messungen der mittleren Strahlungstemperatur umfasst.

13. Vorrichtung zur Durchführung eines Verfahrens nach einem der vorhergehenden Ansprüche, **dadurch gekennzeichnet, dass** sie umfasst: mindestens einen Temperatursensor, der eine Temperatur $T_{ik}$ im Inneren des Gebäudes misst, und eine Vorrichtung zum homogenen Heizen des Gebäudes, die eine gesteuerte Leistungsquelle umfasst, sowie eine elektronische Recheneinheit, die eine Einrichtung zum Erlangen der Messungen der Temperatur $T_{ik}$ im Inneren des Gebäudes und eine Einrichtung zum Durchführen der Rechenschritte des Verfahrens umfasst, welche die Bestimmung der Steigungen $a_k$ oder die Linearisierung des Verlaufs

$$Ln\left[\left(\theta_k(t) - \frac{P_{\text{tot}k}}{K}\right)/\left(\theta_k(0) - \frac{P_{\text{tot}k}}{K}\right)\right]$$ und die Berechnung des Wärmeverlustkoeffizienten K des Gebäudes aus den erlangten Temperaturmessungen sind.

14. Vorrichtung nach Anspruch 13, **dadurch gekennzeichnet, dass** die Heizvorrichtung die Wärmekapazität des Gebäudes unmittelbar heizt und der Temperatursensor die Temperatur in der Luft im Inneren des Gebäudes misst.

15. Vorrichtung nach einem der Ansprüche 13 und 14, **dadurch gekennzeichnet, dass** die elektronische Recheneinheit eine Einrichtung zur automatischen Steuerung der Leistungsquelle in Abhängigkeit von den erlangten Temperaturmessungen aufweist.

16. Verfahren zur Bestimmung des Wärmeverlustkoeffizienten $K$ eines Gebäudes, dessen effektive Wärmekapazität $C$ bekannt ist, wobei $C$ die Energie ist, die erforderlich ist, um die Umgebungstemperatur im Inneren des Gebäudes bei konstanter Außenlufttemperatur um 1 K zu erhöhen, **dadurch gekennzeichnet, dass** es die folgenden Schritte umfasst:

- Vornehmen, in dem leeren Gebäude, einer Reihe von Messungen mindestens einer Temperatur $T_i$ im Inneren des Gebäudes in eng beieinander liegenden Zeitintervallen über einen einzigen Zeitraum, der einer von null verschiedenen Heizleistung $P_{\text{tot}}$ des Gebäudes entspricht;
- Bestimmen der Außenlufttemperatur $T_e$ zu denselben eng beieinander liegenden Zeiten;
- ausgehend vom Verlauf $T_i(t)$ der Größe $T_i$ bezogen auf die Zeit:

• bei Vorliegen eines Zeitintervalls $\Delta t$, für das der Verlauf $T_i(t)$ im Wesentlichen linear ist, Bestimmen, über dieses Zeitintervall $\Delta t$, der Steigung $\alpha$ der Tangente an der Kurve $T_i(t)$ und Ableiten des Wertes des Wärmeverlustkoeffizienten $K$ des Gebäudes aus der Steigung $\alpha$ und der effektiven Wärmekapazität C des Gebäudes;
• bei Nichtvorliegen eines Zeitintervalls, für das der Verlauf $T_i(t)$ im Wesentlichen linear ist, Auswählen eines Zeitintervalls $\Delta t'$, über dem der Verlauf $T_i(t)$ im Wesentlichen exponentiell vom Typ exp($-Kt/C$) ist, und Ableiten des Wertes des Wärmeverlustkoeffizienten K des Gebäudes, welcher ein Wert derart ist, dass die

Kurve $Ln\left[\left(\theta(t) - \frac{P_{tot}}{K}\right)/\left(\theta(0) - \frac{P_{tot}}{K}\right)\right]$ eine Gerade mit $\theta(t) = T_i(t) - T_{em}'$ ist, wobei $T_{em}'$ der

Mittelwert der Messungen der Außenlufttemperatur $T_e$ über dem Zeitintervall $\Delta t'$ ist.

## Claims

1. A method for determining the heat loss coefficient $K$ of a premises, **characterized in that** it comprises steps in which:

- in the unoccupied premises, a campaign of measurements of at least one temperature inside the premises $T_{ik}$ at closely-spaced time intervals is performed over at least two successive time periods $D_k$ corresponding to distinct heating powers $P_{\text{tot}k}$ of the premises;
- the temperature of the outside air $T_{ek}$ at said same closely-spaced times is determined;

- for each time period $D_k$, on the basis of the evolution $T_{ik}(t)$ of the quantity $T_{ik}$ as a function of time:

○ either, if there exists a time interval $\Delta t_k$ for which the evolution $T_{ik}(t)$ is substantially linear, the slope $\alpha_k$ of the tangent to the curve $T_{ik}(t)$ is determined over this time interval $\Delta t_k$ and the value of the heat loss coefficient $K$ of the premises is deduced on the basis of the slopes $\alpha_k$ ;

○ or, if there does not exist any time interval for which the evolution $T_{ik}(t)$ is substantially linear, a time interval $\Delta t_k'$ is selected over which the evolution $T_{ik}(t)$ is substantially exponential of type $\exp(-t/\tau)$, with $\tau$ the thermal time constant of the premises, and the value of the heat loss coefficient $K$ of the premises is deduced, which is the value such that the curve $Ln\left[ (\theta_k(t) - \dfrac{P_{\mathrm{tot}k}}{K})/(\theta_k(0) - \dfrac{P_{\mathrm{tot}k}}{K}) \right]$ is a straight line, with $\theta_k(t) = T_{ik}(t) - T_{ekm}'$ where $T_{ekm}'$ is the average of the temperature measurements of the outside air $T_{ek}$ over the time interval $\Delta t_k'$.

2. The method as claimed in claim 1, **characterized in that**, for each time period $D_k$, the heating power $P_{\mathrm{tot}k}$ of the premises comprises a heating power $P_{\mathrm{imp}k}$ imposed by means of a controlled power source.

3. The method as claimed in either of the preceding claims, **characterized in that** it comprises steps in which:

- in the unoccupied premises and over two successive time periods $D_1$ and $D_2$ are performed:

i. over the first time period $D_1$, the application of a first imposed heating power $P_{\mathrm{imp}1}$ of the premises by means of a controlled power source, and a campaign of measurements of at least one temperature inside the premises $T_{i1}$ at closely-spaced time intervals, as well as the determination of the temperature of the outside air $T_{e1}$ at said same closely-spaced times, and then

ii. over the second time period $D_2$, the application of a second imposed heating power $P_{\mathrm{imp}2}$ of the premises by means of a controlled power source, where the second imposed heating power $P_{\mathrm{imp}2}$ is different from the first power $P_{\mathrm{imp}1}$, and a campaign of measurements of at least one temperature inside the premises $T_{i2}$ at closely-spaced time intervals, as well as the determination of the temperature of the outside air $T_{e2}$ at said same closely-spaced times;

- for each of the first and second time periods $D_1$ and $D_2$, a time interval $\Delta t_1$ or $\Delta t_2$ is selected for which the evolution $T_{i1}(t)$ or $T_{i2}(t)$ is substantially linear and the slope $\alpha_1$ or $\alpha_2$ of the tangent to the curve $(T_{ik}(t))_{k = 1 \text{ or } 2}$ over this time interval $\Delta t_1$ or $\Delta t_2$ is determined;

- the value of the heat loss coefficient $K$ of the premises is deduced on the basis of the ratio of the slopes $\dfrac{\alpha_1}{\alpha_2}$ .

4. The method as claimed in claim 3, **characterized in that** one power from among the first imposed heating power $P_{\mathrm{imp}1}$ and the second imposed heating power $P_{\mathrm{imp}2}$ is zero, whilst the other power is non-zero.

5. The method as claimed in any one of claims 2 to 4, **characterized in that** the controlled power source is a fixed item of equipment of the premises.

6. The method as claimed in any one of claims 2 to 4, **characterized in that** the controlled power source is a source brought into the premises specifically for the implementation of the method.

7. The method as claimed in any one of the preceding claims, **characterized in that**, over each time period $D_k$, the temperature of the outside air $T_{ek}$ is stable.

8. The method as claimed in any one of the preceding claims, **characterized in that**, over each time period $D_k$, the solar radiation is weak, preferably zero.

9. The method as claimed in claim 8, **characterized in that** it is carried out in its entirety over a single nocturnal period.

10. The method as claimed in any one of the preceding claims, **characterized in that**, over each time period $D_k$, any fixed ventilation system fitted to the premises is deactivated.

11. The method as claimed in any one of the preceding claims, **characterized in that** the determination of the temperature of the outside air $T_{ek}$ at said same closely-spaced times is obtained through a campaign of measurements.

12. The method as claimed in any one of the preceding claims, **characterized in that** each campaign of measurements of the temperature inside the premises comprises measurements of the ambient temperature, measurements of the temperature of walls and/or measurements of the radiant mean temperature.

13. A device for the implementation of a method as claimed in any one of the preceding claims, **characterized in that** it comprises at least one temperature sensor which measures a temperature inside the premises $T_{ik}$ and a heating device for homogeneous heating of the premises comprising a controlled power source, as well as an electronic computation unit comprising means for acquiring the temperature measurements inside the premises $T_{ik}$ and means for implementing the computation steps of the method that are the determination of the slopes $a_k$, or the linearization

of the evolution $Ln\left[(\theta_k(t) - \dfrac{P_{totk}}{K})/(\theta_k(0) - \dfrac{P_{totk}}{K})\right]$, and the computation of the heat loss coefficient $K$ of the premises, on the basis of the acquired temperature measurements.

14. The device as claimed in claim 13, **characterized in that** the heating device heats the heat capacity of the premises directly and the temperature sensor measures the temperature in the air inside the premises.

15. The device as claimed in any one of claims 13 and 14, **characterized in that** the electronic computation unit comprises means of automatic control of the power source as a function of the acquired temperature measurements.

16. A method for determining the heat loss coefficient $K$ of a premises whose effective heat capacity $C$ is known, where $C$ is the energy required to increase the ambient temperature inside the premises by 1 K whilst the temperature of the outside air is constant, **characterized in that** it comprises steps in which:

   - in the unoccupied premises, a campaign of measurements of at least one temperature inside the premises $T_i$ at closely-spaced time intervals is performed over a single time period corresponding to a non-zero heating power $P_{tot}$ of the premises;
   - the temperature of the outside air $T_e$ at said same closely-spaced times is determined;
   - on the basis of the evolution $T_i(t)$ of the quantity $T_i$ as a function of time:

     o either, if there exists a time interval $\Delta t$ for which the evolution $T_i(t)$ is substantially linear, the slope $\alpha$ of the tangent to the curve $T_i(t)$ over this time interval $\Delta t$ is determined and the value of the heat loss coefficient $K$ of the premises is deduced on the basis of the slope $\alpha$ and of the effective heat capacity $C$ of the premises;

     ○ or, if there does not exist any time interval for which the evolution $T_i(t)$ is substantially linear, a time interval $\Delta t'$ is selected over which the evolution $T_i(t)$ is substantially exponential of type $\exp(-Kt/C)$ and the value of the heat loss coefficient $K$ of the premises is deduced, which is the value such that the curve

$Ln\left[(\theta(t) - \dfrac{P_{tot}}{K})/(\theta(0) - \dfrac{P_{tot}}{K})\right]$ is a straight line, with $\theta(t) = T_i(t) - T_{em}'$ where $T_{em}'$ is the average of the temperature measurements of the outside air $T_e$ over the time interval $\Delta t'$.

**Fig. 1**

**Fig. 2**

**Fig. 3**

**Fig. 7**

**Fig. 4**

EP 2 612 124 B1

EP 2 612 124 B1

Fig. 5

Fig. 6

**Fig. 8**

EP 2 612 124 B1

**EP 2 612 124 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- NL 1035399 C1

- FR 2907215 A1